# EUROPEAN PATENT APPLICATION

(11) **EP 4 660 610 A1**
(43) Date of publication of application: **10.12.2025**
(21) Application number: 24382598.1
(22) Date of filing: 03.06.2024
(51) Int. Cl.: G01N 21/35, G01N 21/552

(54) **AN OPTICAL FLUID SENSOR AND AN OPTICAL FLUID SENSOR ARRANGEMENT**

(71) Applicant: Fundació Institut de Ciències Fotòniques, 08860 Castelldefels (Barcelona) (ES); Institució Catalana de Recerca i Estudis Avançats, 08010 Barcelona (ES); ASOCIACIÓN CENTRO DE INVESTIGACIÓN COOPERATIVA EN NANOCIENCIAS "CIC nanoGUNE", 20018 San Sebastián, Guipúzcoa (ES)
(72) Inventor: KOPPENS, Frank, 08860 CASTELLDEFELS (ES); CASTILLA, Sebastian, 08860 CASTELLDEFELS (ES); PUSAPATI, Varun-Varma, 08860 CASTELLDEFELS (ES); HILLENBRAND, Rainer, E-200018 Donostia / San Sebastián (ES); BYLINKIN, Andrei, 200018 Donastia / San Sebastian (ES)
(74) Representative: Ponti & Partners, S.L.P

(57) **Abstract**

An optical fluid sensor comprises, integrated into a common chip:
- a substrate (6);
- an optoelectronic active material stack intended to be exposed to a fluid or to an intermediate element exposed to said fluid or to said intermediate element exposed to said fluid;
- a polaritonic launcher (2) to, upon illumination, launch polaritons into the optoelectronic active material stack to propagate there across; and
- circuitry in electrical contact with an electrically active material structure (4) of the stack.

The optoelectronic active material stack is configured and arranged so that the polaritons optically interact with one or more molecular vibrational modes of the fluid, and the circuitry together with the electrically active material structure are configured and arranged to sense the fluid by transducing those optical interactions into an electrical signal.

Also described is an optical fluid sensor arrangement, such as an array, comprising a plurality of the optical fluid sensors.

## Description

### FIELD OF THE INVENTION

The present invention generally relates, in a first aspect, to an optical fluid sensor with a high sensitivity based on exploiting polaritons and far-field and/or near-field light-matter interactions in the sensor.

A second aspect of the present invention relates to an optical fluid sensor arrangement, such as an array, comprising a plurality of optical fluid sensors defined as the optical fluid sensor of the first aspect of the invention, and integrated into a single chip.

### BACKGROUND OF THE INVENTION

Different optical fluid sensors are known in the art, which generally have the need to include bulky and expensive optical elements such as optical filters and detectors, which traditionally constitute a barrier to the miniaturization of fluid sensors, particularly gas sensors, based on optical techniques.

There are also integrated devices, such as that disclosed in US8507890B1, which describes a photoconversion device with enhanced photon absorption, comprising a collector with at least an active layer of graphene patterned into a structured array, which can be used for sensing fluids, by means of the photoconversion of enhanced absorption that can potentially be changed by the environment.

In the device disclosed in US8507890B1, with the graphene surrounded by a fluid, the charging of graphene is said to depend on the ambient conditions, such as the pH or chemical composition of the fluid, and the sensing operation is carried out by illuminating with light of wavelength tuned to the plasmons of the graphene surrounded by a base fluid, so that any changes in the composition of the fluid that result in plasmon wavelength shifting will move the resonance away from the illuminating wavelength, thus potentially producing a decrease in absorption, which can be detected through the thermocouple potential, thus revealing a change in the composition of the fluid. This is shown in that patent only by simulations.

There are also graphene based devices for gas sensing and optical detection of low dimensional polaritons known in the state of the art, although they are mainly being probed by optical measurements. This refers to the cases where an external commercial detector is used in combination with an optical interferometer such as a commercial Fourier transform infrared interferometer (FTIR) or with a scattering scanning near-field optical microscope (s-SNOM) that lead to near-field studies [25-28]. However, these types of equipment constitute bulky platforms.

The typical nanostructures that launch and enhance the low dimensional polaritons are based on graphene nanoribbons [1-7], or hexagonal boron nitride (hBN) nanoribbons [8,9], metal ribbons [10-13], or nanocubes [14]. In the literature, researchers have shown by optical measurements (typically in FTIR) the detection of some gases due to the interaction with low dimensional polaritons such as CO₂[5,8], NO₂[3], NO [3], biomolecules [2,4], and thin films [9, 15, 28].

In order to obtain a compact platform and that outperform the commercially available gas sensors, the electrical detection with spectral resolution of two or low dimensional polaritons is required. This means that the optical interaction between the polaritons and gases can be transduced into an electrical signal using a photodetector. Several approaches based on patterned graphene into nanoribbons [15-17] and nanodisks [17-19] to sustain plasmons and simultaneously acts as a detector channel have been shown mainly based on the bolometric [17-19] and photothermoelectric (PTE) effect [15,18,19], but for a photoresponse with no spectrally resolved polaritonic resonances, and which thus cannot be compared with electrical detection. Nevertheless, the patterning of the graphene channel diminishes significantly the graphene mobility and therefore the sensor performance. Also, weak fingerprints of high mobility bilayer and single graphene plasmons in the terahertz (THz) range have been electrically detected mainly at low temperatures, which is not suitable for gas sensing at the typical ambient conditions [20, 31]. It is worth to point out that the above mentioned detectors have not shown a spectrally resolved electrical detection of low dimensional polaritons and their electrically tunability of the polaritonic nanoresonators spectra by gating the graphene as our invention does.

Another approach has been shown the detection of acetone gas sensing probed by a drop in transmission due to the absorption at the spectral range of the vibrational modes of the acetone gas, which consists of a far field interaction and without demonstrating a direct optical coupling between two optical resonators [21], They employed the use of nanoantenna on top of the unbiased graphene channel. We stress that opposed to this mentioned case in ref. [21], our invention exploits electrically tunable low dimensional polaritons and near-field interactions with fluids like vibrational modes of gases or/and thin films, which enables certain advantages as will be explained below.

In the case of reference [15], the infrared resonances of a thin film (polymethyl methacrylate, PMMA) are detected but with a non-ideal structure which is clearly improvable, among others, in terms of the sensitivity it offers and without a clear near-field interaction between the graphene plasmons and the vibrational modes of the PMMA. In this latter regard, the photocurrent spectrum shows dips related to the PMMA vibrational modes in the photoresponse for both incident light polarization, whereas the graphene plasmons in the nanoribbon can only be excited with one particular incident polarization (perpendicular to the ribbon main axis). Therefore, the photoresponse is mainly related to the optical response of the split ring resonator. Moreover, they do not show gate tunability of the spectral response. In terms of the geometrical aspects, the resonator serves as the source-drain electrodes and the mode volume of this split ring resonator is large since the device size is around 20x20 µm², whereas when having smaller polaritonic mode volumes can lead to a higher confinement, stronger light-matter interaction and can produce a strong Purcell factor. They do not employ a controllable doping inhomogeneity tunability of the graphene. In addition, the low mobility CVD graphene channel is patterned into ribbon, therefore reducing dramatically the quality factor of the polaritonic nanoresonator as explained previously. The polaritonic nanoresonator is limited to graphene plasmons in nanoribbons and not hBN polaritons or other types are involved.

It is, therefore, necessary to provide an alternative to the state of the art by providing an optical fluid sensor which does not possess the above mentioned drawbacks, and which increases the sensitivity of those of the prior art.

### SUMMARY OF THE INVENTION

To that end, the present invention relates, in a first aspect, to an optical fluid sensor, comprising, integrated into a common chip:
- a substrate;
- an optoelectronic active material stack arranged over said substrate, intended to be exposed to a fluid or to an intermediate element exposed to said fluid, and comprising:
- at least one dielectric and/or polaritonic material structure; and
- an electrically active material structure arranged over or under said at least one dielectric and/or polaritonic structure;

wherein at least one of said structures is made of a polaritonic material;
   - circuitry in electrical contact with said electrically active material structure; and
   - a polaritonic launcher configured and arranged to, upon illumination (in any direction: top illumination, bottom illumination, side illumination, or a combination thereof), launch polaritons (in other words, provide the necessary momentum for the polaritons to propagate) into said optoelectronic active material stack to propagate there across;
wherein said optoelectronic active material stack is configured and arranged so that, when exposed to said fluid or to said intermediate element exposed to said fluid, said polaritons carry out far-field and/or near-field optical interactions with one or more molecular and/or atomic vibrational modes of the fluid;
and wherein said circuitry together with said electrically active material structure are configured and arranged to sense the fluid by transducing said optical interactions into an electrical signal representing a change in a property of the polaritons, such as their spectrum and/or amplitude.

The terms "exposed to the fluid" refer both to the fluid being in contact with some of the structures of the optoelectronic active material stack, for those embodiments referring to near-field optical interactions, and to those scenarios where the fluid is located at a distance from the optoelectronic active material stack, for those embodiment referring to far-field optical interactions.

In addition, mainly for those embodiments referring to far-field optical interactions (but also valid for some embodiments referring to near-field optical interactions), the optoelectronic active material stack is not exposed to the fluid but to the above mentioned intermediate element exposed to the fluid, where that intermediate element can be a window, a chamber, etc.

In any case, the optical fluid sensor of the first aspect of the present invention is able to detect a drop in transmission at a specific spectral position (or positions) where the fluid resonances and polaritonic resonances overlap.

The optical fluid sensor of the first aspect of the present invention serves simultaneously as a substrate, such as a SEIRA (surface-enhanced infrared absorption spectroscopy) substrate, hosting polaritons, such as hyperbolic phonon polaritons (HPhPs) and light (such as infrared light) detector.

For an embodiment, the at least one dielectric and/or polaritonic material structure comprises:
- a first dielectric and/or polaritonic material structure arranged over or under said electrically active material structure; and
- a second dielectric and/or polaritonic material structure arranged under or over said electrically active material structure.

For an embodiment, the electrically active material structure acts also as a polaritonic material structure, i.e. is made of a polaritonic material, while for other embodiment it is the first and/or the second dielectric and/or polaritonic material structure which is made of a polaritonic material.

For an embodiment, the at least one dielectric and/or polaritonic material structure is also an electrically active material structure, for out-of-plane carrier extraction.

For an embodiment, the polaritonic launcher is provided by the structure made of a polaritonic material. In other words, for this embodiment, the polaritonic launcher is the only polaritonic material in the whole optical fluid sensor, so that this polaritonic launcher itself sustain the polaritons and the electroactive material will be absorbing the far-filed and/or near-field optical interactions.

A polaritonic material in the present document means a material providing a polaritonic behaviour for some wavelength, particularly for those of interest, i.e. for those which are targeted for the fluid sensing process, and preferably for a broad wavelength range.

For example, for an embodiment for which the electrically active material structure is made of graphene (or of any other polaritonic material) and the other two structures of the optoelectronic active material stack are made of dielectric materials, graphene can work as a polaritonic material since the spectral range is present in a very broad band, from NIR (Near InfraRed) to THz-GHz, while dielectric materials provide no polaritonic behaviour or a polaritonic behaviour only present in specific spectral regions. Therefore in those spectral regions where those structures are not polaritonic active, graphene (or any other electrically active and polaritonic material) can work as the polaritonic material.

Depending on the embodiment, the polaritonic launcher is arranged in contact with at least one of the structures of the optoelectronic active material stack that is made of a polaritonic material, or in contact with an intermediate dielectric structure that is in contact with the electrically active material structure.

Generally, each of the above mentioned structures is formed by one or more layers.

In an embodiment, of the optical fluid sensor of the first aspect of the invention, called herein as Configuration 1 embodiment, the first dielectric and/or polaritonic structure is in contact with the substrate, a top face of the second dielectric and/or polaritonic material structure and/or a top face of the electrically active material structure (when not fully covered by the second dielectric and/or polaritonic material structure) being intended to be exposed to the fluid or to the intermediate element exposed to the fluid.

According to another embodiment, called herein as Configuration 2 embodiment, the polaritonic launcher is in contact with the substrate, at least a top face of the first dielectric or polaritonic structure being intended to be exposed to the fluid or to the intermediate element exposed to the fluid.

For an implementation of that Configuration 2 embodiment, there are portions of the second dielectric and/or polaritonic material structure and/or of the electrically active material structure (when not fully covered by the second dielectric and/or polaritonic material structure) surrounding the polaritonic launcher, those portions being also in contact with the substrate.

For another implementation of that Configuration 2 embodiment, an intermediate medium or intermediate material (such as a dielectric material) surrounding the polaritonic launcher is also in contact with the substrate.

For a variant of that implementation, for which there is the above mentioned intermediate medium surrounding the polaritonic launcher, a bottom face of the second dielectric and/or polaritonic material structure facing that intermediate medium and/or a bottom face of the electrically active material structure (when not fully covered by the second dielectric and/or polaritonic material structure) facing that intermediate medium are/is also intended to be exposed to the fluid or to the intermediate element exposed to the fluid.

For respective implementations of the Configuration 1 and Configuration 2 embodiments, the polaritonic launcher acts also as a gate, forming part of the circuitry, at least for creating a doping inhomogeneity across an electrically active material channel defined in the electrically active material structure via electric gating, and, optionally, also for tuning the polaritonic resonances and or electrically active material's Fermi energy.

For another embodiment, called herein as Configuration 3 embodiment, the above mentioned circuitry further comprises a gate (e.g. split gate, multiple gates, back and/or top gate, etc.) at least for creating, via electric gating, a doping inhomogeneity across an electrically active material channel defined in the electrically active material structure, and, optionally, also for tuning the polaritonic resonances and/or electrically active material's Fermi energy. The gate is arranged between the substrate and the first dielectric and/or polaritonic structure, a top face of the second dielectric and/or polaritonic material structure and/or a top face of the electrically active material structure (when not fully covered by the second dielectric and/or polaritonic material structure) being intended to be exposed to the fluid orto the intermediate element exposed to the fluid.

In another embodiment, called herein as Configuration 4 embodiment, the above mentioned circuitry further comprises a gate at least for creating, via electric gating, a doping inhomogeneity across an electrically active material channel defined in the electrically active material structure, and, optionally, also for tuning the polaritonic resonances and/or electrically active material's Fermi energy. The gate is arranged on top of the first dielectric and/or polaritonic structure, wherein the polaritonic launcher is in contact with the substrate, at least the gate being intended to be exposed to the fluid or to the intermediate element exposed to the fluid.

For an implementation of that Configuration 3 embodiment, there are portions of the second dielectric and/or polaritonic material structure and/or of the electrically active material structure (when not fully covered by the second dielectric and/or polaritonic material structure) surrounding the polaritonic launcher, those portions being also in contact with the substrate.

For another implementation of that Configuration 3 embodiment, an intermediate medium or intermediate material (such as a dielectric material) surrounding the polaritonic launcher is also in contact with the substrate.

For a variant of that implementation, for which there is the above mentioned intermediate medium surrounding the polaritonic launcher, a bottom face of the second dielectric and/or polaritonic material structure facing said intermediate medium and/or a bottom face of said electrically active material structure (when not fully covered by the second dielectric and/or polaritonic material structure) facing said intermediate medium are/is also intended to be exposed to the fluid or to the intermediate element exposed to the fluid.

In the above Configuration 1 to 4 embodiments, for some implementations, the different structures of the optoelectronic active material stack have the same width and length and are stacked so that none of them project from the other longitudinally or transversally, while for other variants or implementations they do not have the same length and/or width and/or project, i.e. are spatially shifted, from the others longitudinally and/or transversally.

For some of those other variants or implementations is for which the alternatives mentioned above with respect to which a top or a bottom face of the electrically active material structure is intended to be exposed to the fluid or to the intermediate element exposed to the fluid are valid, when that top or bottom face is not fully covered by the second dielectric and/or polaritonic material structure, generally because the latter has a lower length and width, for example, when that second dielectric and/or polaritonic material structure is just a dielectric spacer covering only the bottom or top face of the launcher (the advantage of this approach is that no lithography is required and could lead to a more scalable fabrication process), although that would also occur if having the same length and width the second dielectric and/or polaritonic material structure would project from the electrically active material structure longitudinally and/or transversally.

Any of the above mentioned doping inhomogeneities provides a junction defined as the boundary of two regions with different doping, for example between two different materials (e.g. two types of semiconductors), or between portions of the same material having a different doping. Any of the following junctions can work according to the present invention, for different embodiments: p-p', np, pn, n'n, nn', p'p, pi, i-p, n-i, i-n, where p' is slightly doped p-type and n' means slightly doped n-type and i is intrinsic doping of the material or at the charge neutrality point of doping.

The present invention is made for sensing molecules or atoms of gases and any other kind of fluids, with will be supported by experimental data in a section below.

In different embodiments, the polaritonic launcher and the optoelectronic active material stack are configured and arranged so that the polaritons are phonon polaritons and/or hyperbolic phonon polaritons and/or plasmon polaritons and/or exciton polaritons.

Preferably, the optoelectronic active material stack is a low dimensional stack, so that the polaritons are low dimensional polaritons.

With respect to the electrically active material structure, depending on the embodiment this is made of at least one of the following materials:
- Graphene and its derivatives (graphene oxide, reduced graphene oxide), such as bilayer graphene, few layer graphene, twisted graphene and related (e.g. twisted double bilayer graphene)
- Graphdiyne, graphXenes or a similar low dimensional material;
- Transition Metal Dichalcogenides (TMDCs): MoS₂, WS₂, WSe₂, MoTe₂, PtS₂, TiS₂, TiSe₂, TaSe₂, NbSe₂, and many more;
- Black Phosphorus (BP) and its derivatives (blue phosphorus, red phosphorus);
- Group V-Based 2D Materials: Phosphorene, antimonene, bismuthene, alarsenide, arsenene;
- Group III-V Based 2D Materials: GaN, InGaAs, AlGaN, GaP, InP;
- 2D Halide Perovskites: (CH₃NH₃)Pbl₃, (C₂H₅NH₃)₂SnBr₆, CsPbBr₃, and various other compositions;
- Other Emerging Materials: GaS, h-BN, BiOCIs, 2D metal-organic frameworks (MOFs), silicene, germanene, borophene.
- A combination of any of two or more of the above listed materials, such as a combination of different materials laterally arranged with a junction, or arranged with a vertical junction.

According to an embodiment, the optoelectronic active material stack and at least one of the polaritonic launcher and the circuitry are configured and arranged to excite polaritons according to multiple polaritonic modes to sense different fluids and/or different molecular components of the composition of the fluid.

For an implementation of that embodiment, the optoelectronic active material stack and/or the polaritonic launcher are geometrically tuned to cause the excitation of polaritons according to multiple polaritonic modes, to target multiple wavelengths.

For another implementation of that embodiment, alternative or complementary to the above implementation, the circuitry is configured and arranged to electrically tune the spectral resonances of the polaritonic modes of the optoelectronic active material stack to cause the excitation of polaritons according to multiple polaritonic modes, to target multiple wavelengths.

For another embodiment, the optoelectronic active material stack and at least one of the polaritonic launcher and the circuitry are configured and arranged to excite polaritons according to the same polaritonic mode with different fluids and/or different molecular components of the composition of the fluid and to distinguish those different fluids and/or different molecular components when providing different vibrational lines (usually very narrow vibrational lines) within the photoresponse spectrum associated to that same vibrational mode.

In an embodiment, the circuitry comprises at least two electrodes contacting two opposite ends of the electrically active material structure for measuring a photo-induced electrical signal circulating there across, such as a photocurrent, and/or present there across, such as a photovoltage. This signal encodes the fluid's molecular and/or atomic vibrational fingerprint, which is strongly enhanced compared to that observed in standard far-field absorption spectroscopy.

Depending on the embodiment, the polaritonic launcher comprises at least one launcher element made of metal, graphite, polaritonic material, dielectric resonators or can be also a polaritonic material itself.

For different embodiments, the polaritonic launcher is or comprises at least one of the following launcher elements: a grating, nano rods, nano cubes, nano disks, a split gate, an antenna, an antenna split gate, cavities/nanoholes, a single gate plus a back gate, electrodes or a combination thereof, such as any periodic array of these configurations.

According to an implementation of any of the Configurations 1 to 4 embodiments, the optical fluid sensor of the first aspect of the present invention further comprises an optical waveguide integrated into the substrate, wherein the optical waveguide is configured and arranged to at least provide the illumination to the polaritonic launcher element, and thus providing the illumination in an on-chip configuration for sensing platform. Optionally, the optical waveguide could also be used for light modulation.

One of the advantages of this embodiment is that the light is well confined in the waveguide and guided to the sensing area, i.e. to the electrically active material structure.

This waveguide allows implementing highly compact platforms, like on on-chip sensors with the integrated light source in the chip, as well as integrated interferometers for infrared range such as MEMS.

For some embodiments, the optical fluid sensor of the present invention further integrates in the common chip, light sources, such as quantum cascade lasers, for producing the above mentioned illumination, and/or even electrical generators for the polaritons.

A second aspect of the present invention relates to an optical fluid sensor arrangement, such as an array, comprising at least two optical fluid sensors defined as the optical fluid sensor of the first aspect of the invention, integrated into a single chip integrating the common chips of each of said optical fluid sensors (i.e., a single chip integrates the components of all the optical fluid sensors).

For an embodiment, the at least two optical fluid sensors of the optical fluid sensor arrangement of the second aspect of the present invention are arranged displaced on a same plane, while for other embodiments they are arranged at different planes

In an embodiment, the at least two optical fluid sensors are configured and arranged (as explained above for the first aspect of the invention) to target multiple wavelengths or spectral ranges, for applications of multiple gases detection, for instance.

In another embodiment, the at least two optical fluid sensors are configured and arranged (as explained above for the first aspect of the invention) to target the same specific wavelength or same specific spectral range, to maximize the measured signal for that specific wavelength or specific wavelength range, or to implement redundancy.

The optical fluid sensor and optical fluid sensor arrangement of the present invention have many different applications, such as, when used to sense gas, targeting, for example, the environmental control sector, fire and security alarm departments, medical devices for diagnosis and health monitoring, different uses for agriculture-food sector, such as for monitoring the fruit ripening process, etc. Other similar applications can be targeted when the present invention is used to sense liquids.

In the present invention, generally far-field light excitation is used (spot size in the order of the wavelength or above) that consists of a global photoresponse of the sensor.

The proposed optical fluid sensor and arrangement present a range of advantages with respect to competing technologies, enabling the development of a highly accurate fluid sensor and arrangement that display both high sensitivity and selectivity. A fast detection below 1 second of response time is also achieved with the proposed optical fluid sensor. The proposed sensor and arrangement overcomes the need to include bulky and expensive optical elements such as optical filters and detectors, and, for some embodiments, implements selective gas sensors by infrared spectroscopic gas analysis using direct electrical detection of low dimensional plasmon or phonon polaritons within the same device.

Furthermore, gas sensors are increasingly being integrated in a range of portable, wireless devices, in both industrial and commercial scenarios. This contributes to the overall loT (Internet of Things) trend, whereby an increasing number of objects are capable of sensing, processing, and remotely communicating data across a network.

To achieve such loT integrability, gas sensors should:
- Be compatible with complementary metal oxide semiconductor (CMOS) fabrication processes;
- Operate under low power consumption mode (below mW range), at room temperature, and under a variety of environmental conditions (e.g., in the absence of 02);
- Exhibit high sensitivity, e.g., a limit of detection (LOD) of 0.1 ppm, and high selectivity;
- Possess a low response time (below 1 second);
- Be small and light enough to integrate into portable devices.

At present no technology that fulfils all of the above requirements exists on the market.

The optical fluid sensor of the present invention combines the polaritons with an electrically active material (such as graphene) based photodetector in a single device, thus providing a highly compact and efficient sensing platform, without the requirement of an external photodetector. The main goal of this compact sensor is to electrically detect multiple gases (or other kinds of fluids) in a scalable and CMOS compatible system with high sensitivity (~0.1 ppm), while maintaining specificity and with the optically active element and electrical detector integrated in one single device.

Due to the nature of the present invention, and particularly because of being based the electro polaritonic effect for sensing, the optical fluid sensor and optical fluid sensor arrangement of the present invention has the following advantages:
- Sensitive and selective fluid sensing.
- Fast sensing detection.
- Reusable sensor and sensor arrangement.
- CMOS (complementary metal oxide semiconductor) compatible and highly compact sensing platform.
- Low noise and low power consumption sensor and sensor arrangement
- Room temperature operation and without the presence of oxygen.

### BRIEF DESCRIPTION OF THE FIGURES

In the following some preferred embodiments of the invention will be described with reference to the enclosed figures. They are provided only for illustration purposes without however limiting the scope of the invention. In accordance with common practice, the components in the figures are drawn to emphasize specific features and they are not drawn to the right scale. In most of the cross sections shown in some of the appended figures the source-drain electrodes have been omitted, for simplicity.

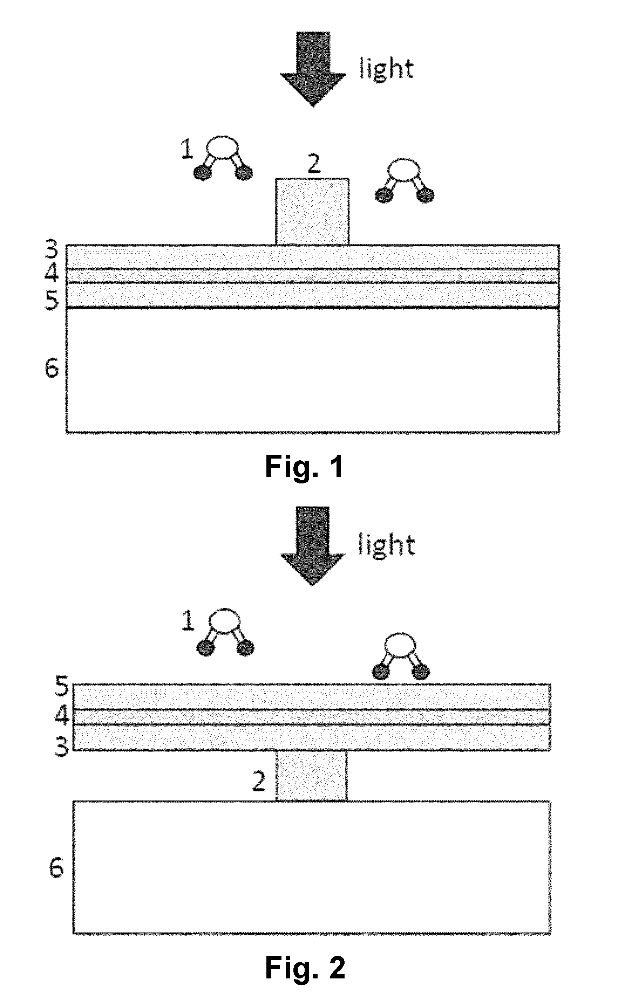

Figure 1 schematically shows the Configuration 1 embodiment of the optical fluid sensor of the first aspect of the present invention.
Figure 2 schematically shows the Configuration 2 embodiment of the optical fluid sensor of the first aspect of the present invention.

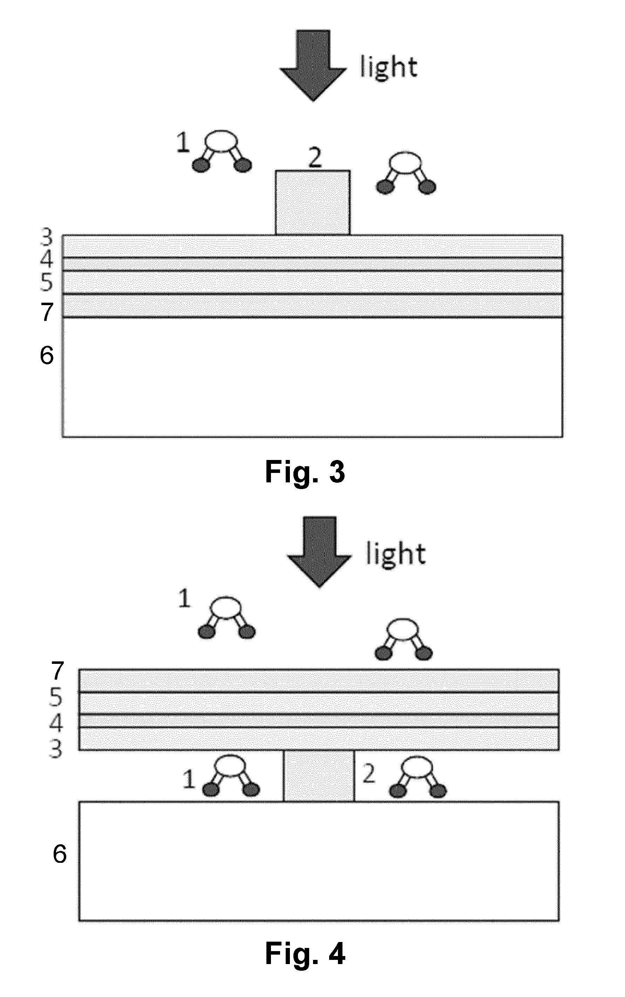

Figure 3 schematically shows the Configuration 3 embodiment of the optical fluid sensor of the first aspect of the present invention.
Figure 4 schematically shows the Configuration 4 embodiment of the optical fluid sensor of the first aspect of the present invention.

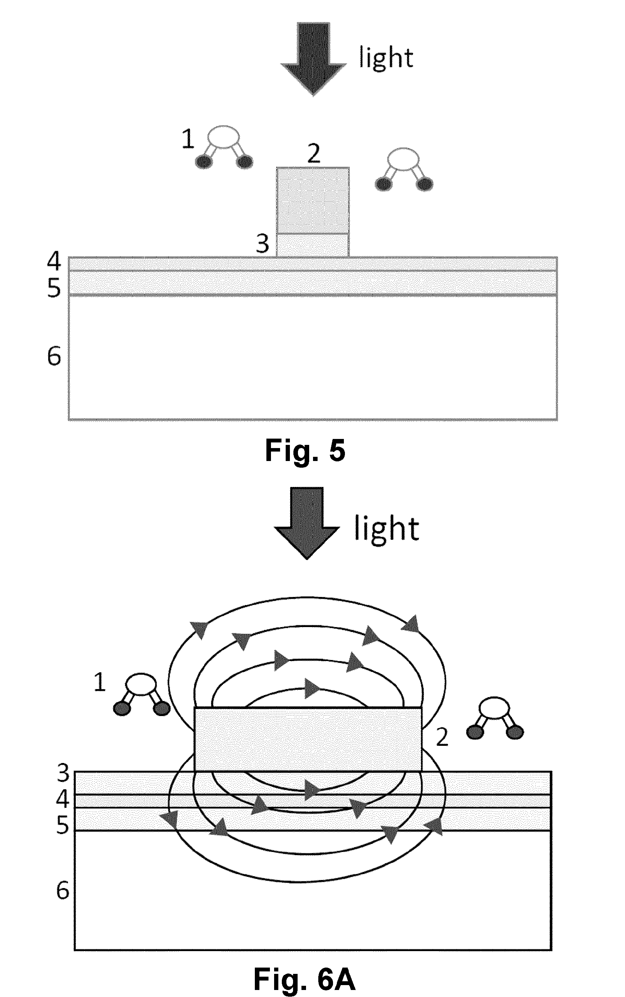

Figure 5 schematically shows a variation of the Configuration 3 embodiment of the optical fluid sensor of the first aspect of the present invention.

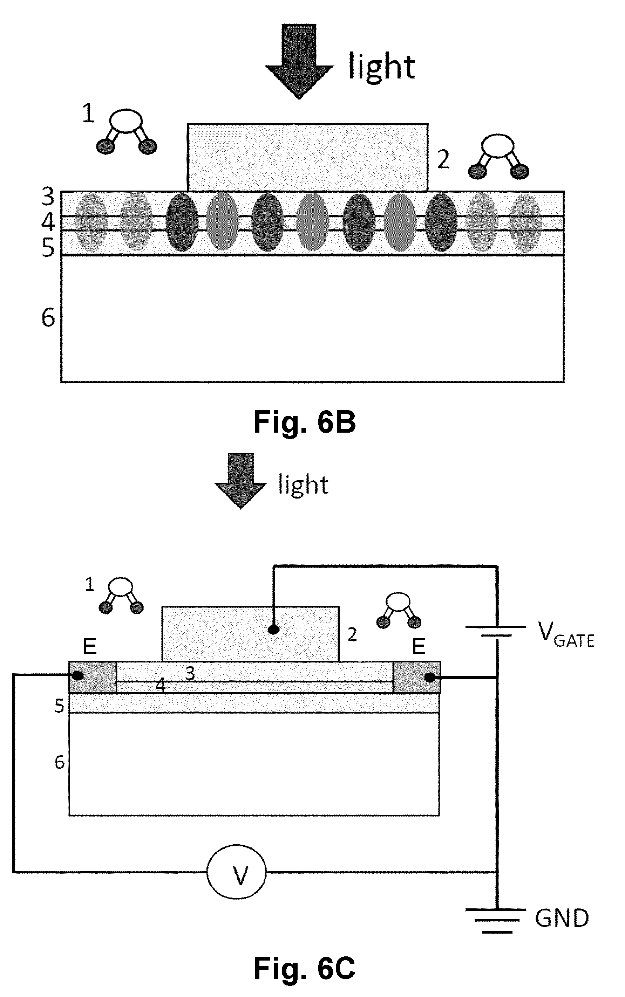

Figures 6A, B and C schematically and sequentially show the fluid sensing mechanism followed by the optical fluid sensor of the first aspect of the invention, for the Configuration 1 embodiment.

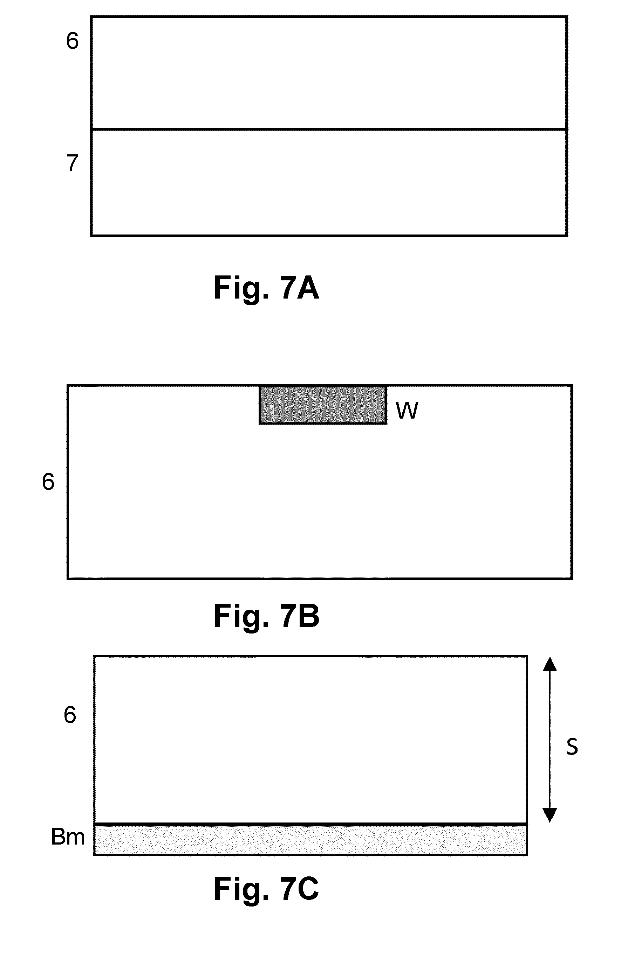

Figures 7A, B and C schematically show different alternatives for components to be arranged on or embedded in the substrate of the optical fluid sensor of the first aspect of the present invention, for some embodiments.

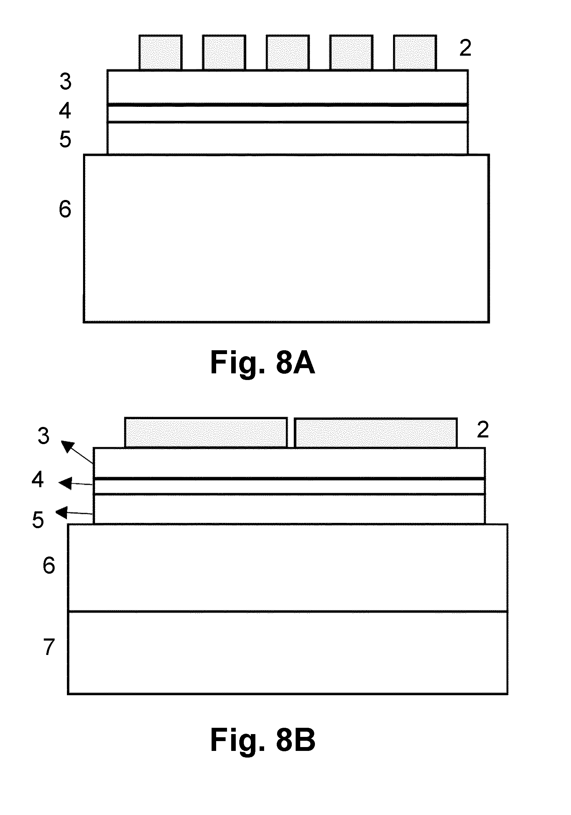

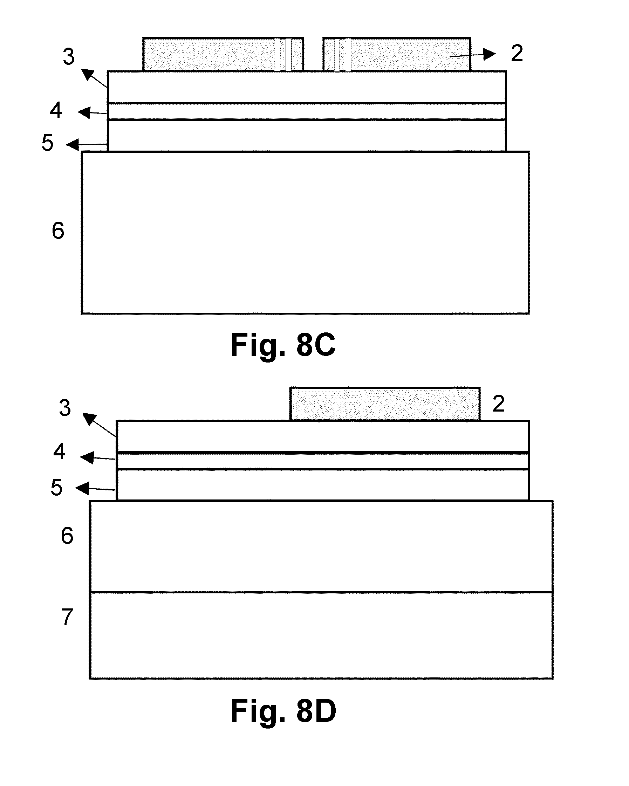

Figures 8A, B, C and D schematically show four respective embodiments of the optical fluid sensor of the first aspect of the present invention, for corresponding variations of the Configuration 1 embodiment.

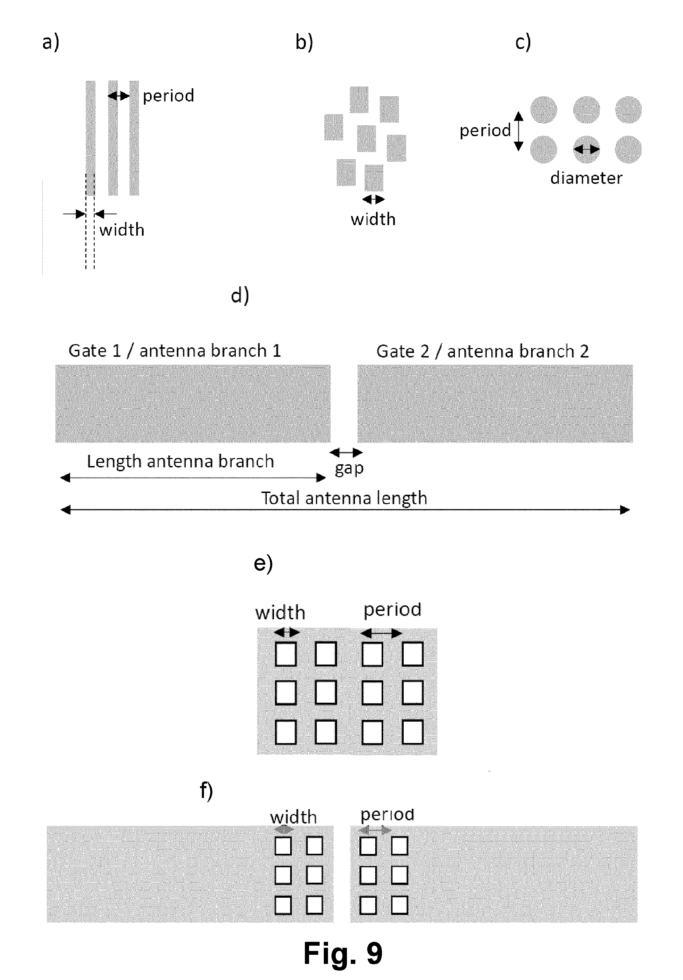

Figure 9 schematically shows, by means of views a) to f), different arrangements of the polaritonic launcher of the optical fluid sensor of the first aspect of the present invention

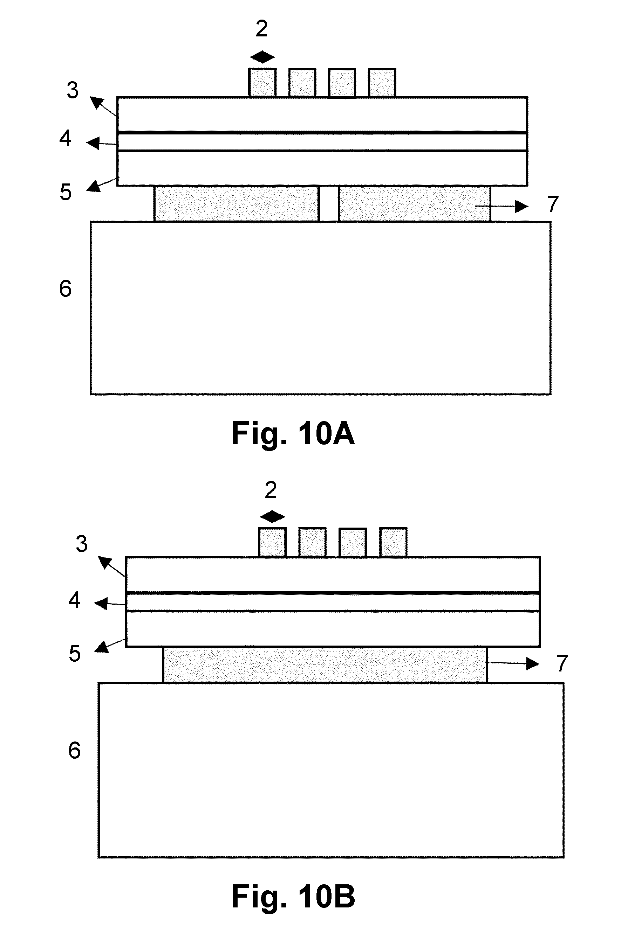

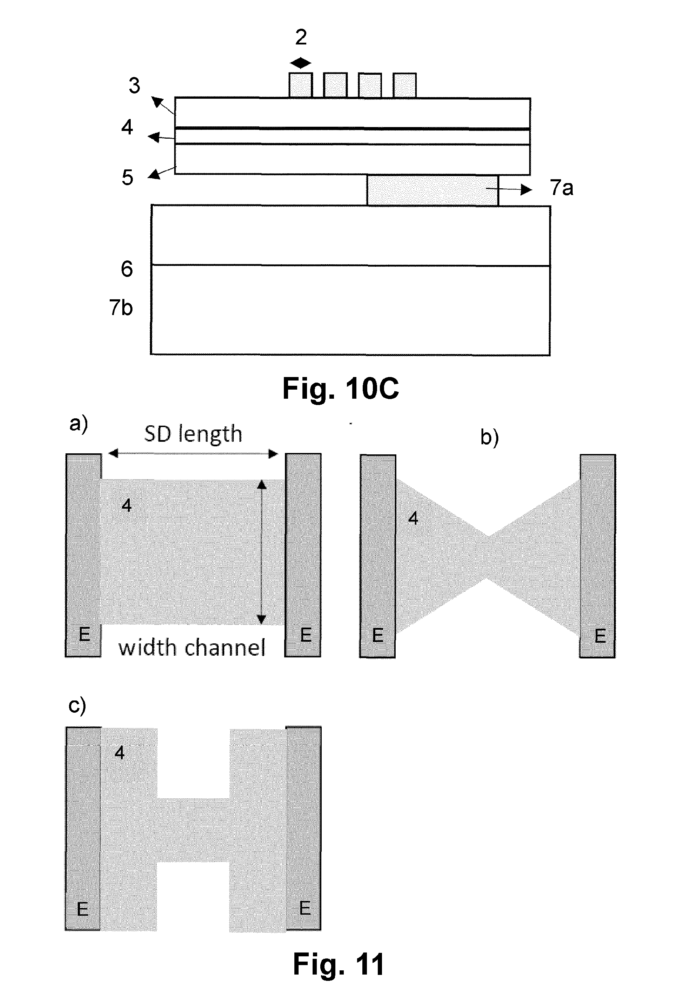

Figures 10A, B and C schematically show three respective embodiments of the optical fluid sensor of the first aspect of the present invention, for corresponding variations of the Configuration 3 embodiment, particularly for different arrangements of gates with polaritonic launchers.
Figure 11 schematically shows, by means of corresponding top views a), b) and c), different variations of the source and drain electrodes of the electrically active material channel, for three corresponding geometries of the electrically active material structure, for embodiments of the optical fluid sensor of the first aspect of the present invention. Some of the components of the of the optical fluid sensor have been omitted, for clarity's sake.

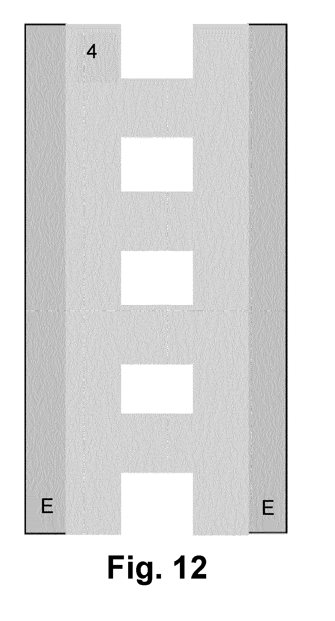

Figure 12 schematically shows, by means of a top view, another variation of the of the source and drain electrodes of the electrically active material channel, for a geometry for which the electrically active material structure implements an array, for an embodiment of the optical fluid sensor of the first aspect of the present invention. Some of the components of the of the optical fluid sensor have been omitted, for clarity's sake.

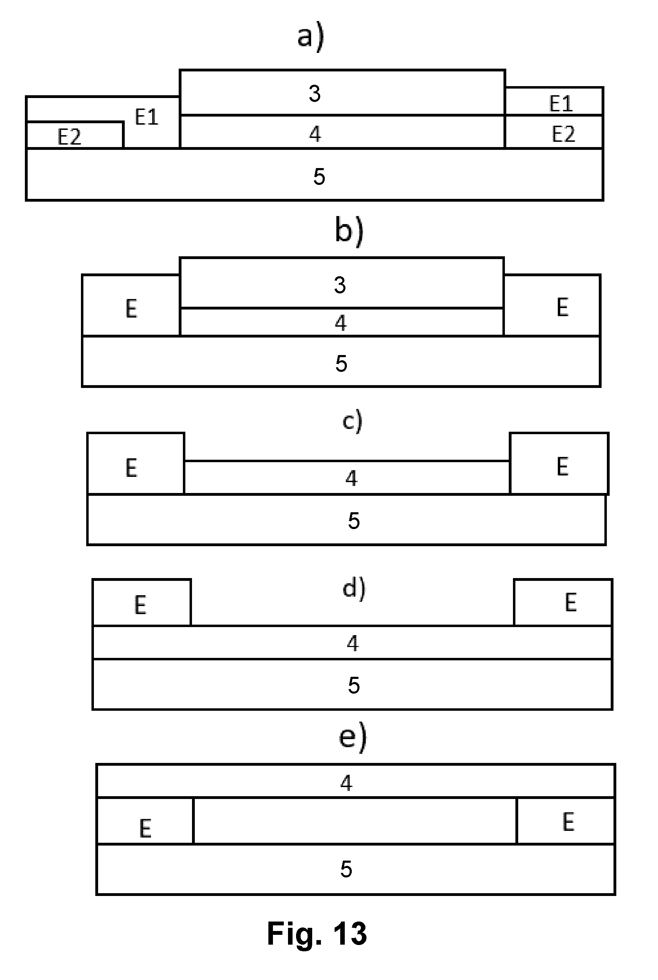

Figure 13 schematically shows, by means of corresponding side elevation cross-sections, in views a) to e), further different variations of the of the source and drain electrodes of the electrically active material channel, for: a) asymmetric contacts, where E1 and E2 are two different materials of the metals and therefore contain different work functions producing a different Fermi level pinning at the graphene-metal interface [29], d) top contacts, e) bottom contacts, and b, c) 1-dimensional contacts, for embodiments of the optical fluid sensor of the first aspect of the present invention. In some views some of the components of the of the optical fluid sensor have been omitted (such as structure 3 in views c), d), e), for clarity's sake.

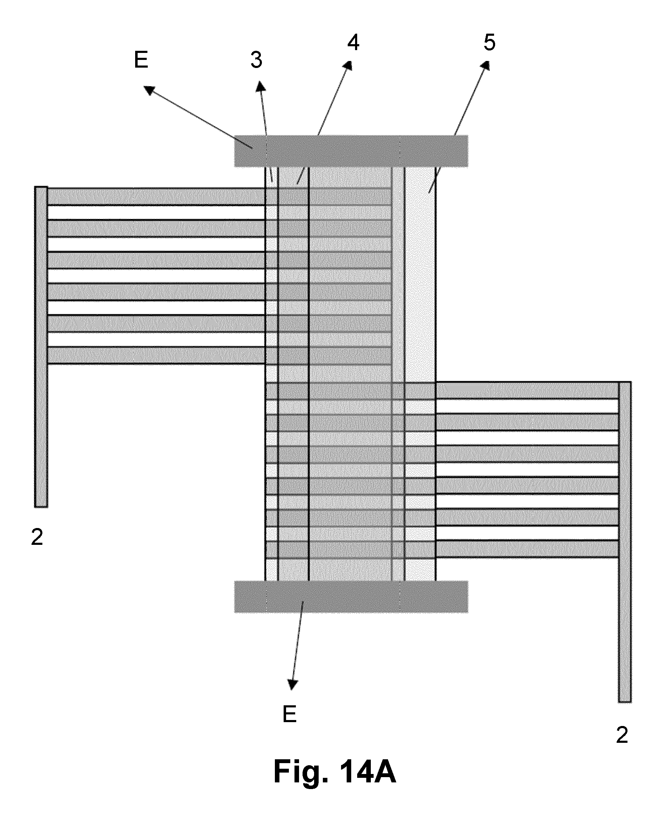

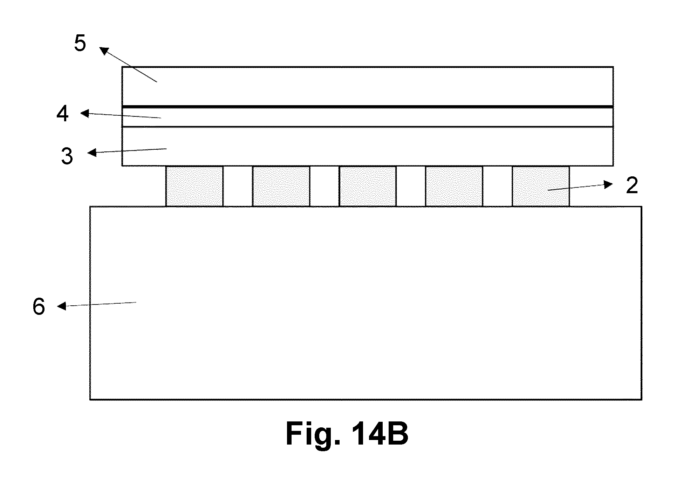

Figures 14A, B schematically show the optical fluid sensor of the first aspect of the present invention, for a variation of the Configuration 2 embodiment of the optical fluid sensor of the first aspect of the present invention, by means of a top view (A) and a side elevation view (B) of a cross-section of part of the components of a similar embodiment as that shown in that top view.

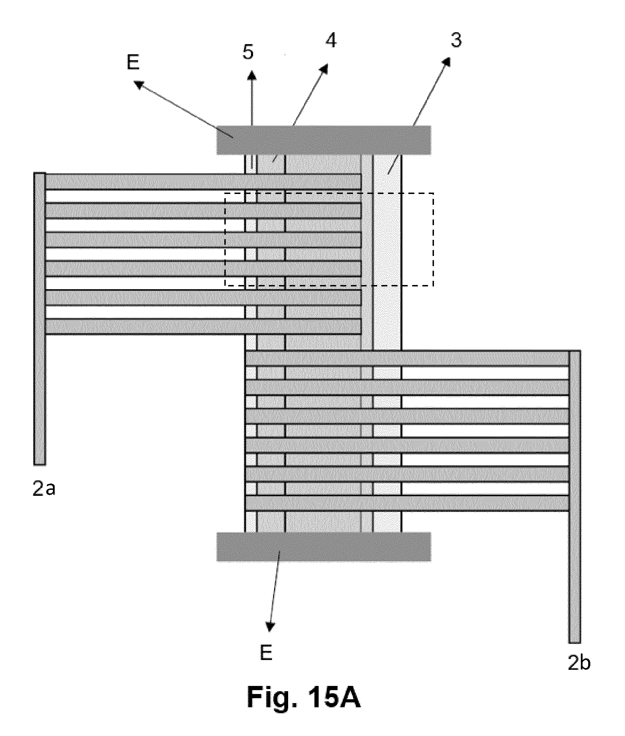

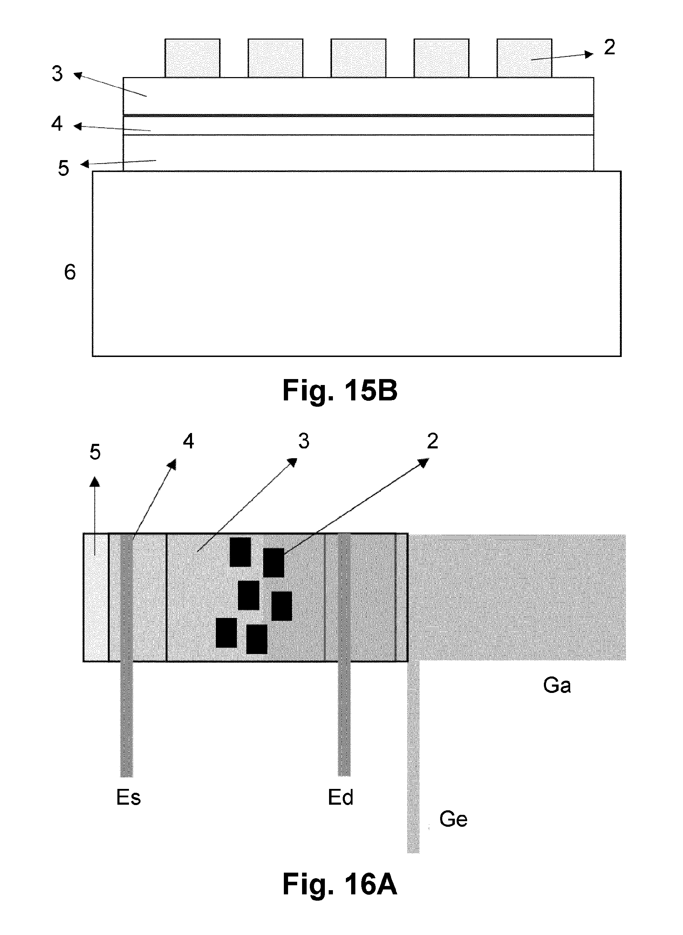

Figures 15A, B schematically show the optical fluid sensor of the first aspect of the present invention, for a variation of the Configuration 1 embodiment of the optical fluid sensor of the first aspect of the present invention, by means of a top view (A) and a side elevation view (B) of a cross-section of part of the components of a similar embodiment as that shown in that top view. In this case, the launchers (element 2) act as two independent gates connected to 2 separate electrodes (2a and 2b). The dashed square in Fig. 15A represents the region presented in Fig. 15B. In Figure 15A, the letter a and b in element 2 indicates that although being the same type of polaritonic launcher, they constitute two separate gates that are independent.

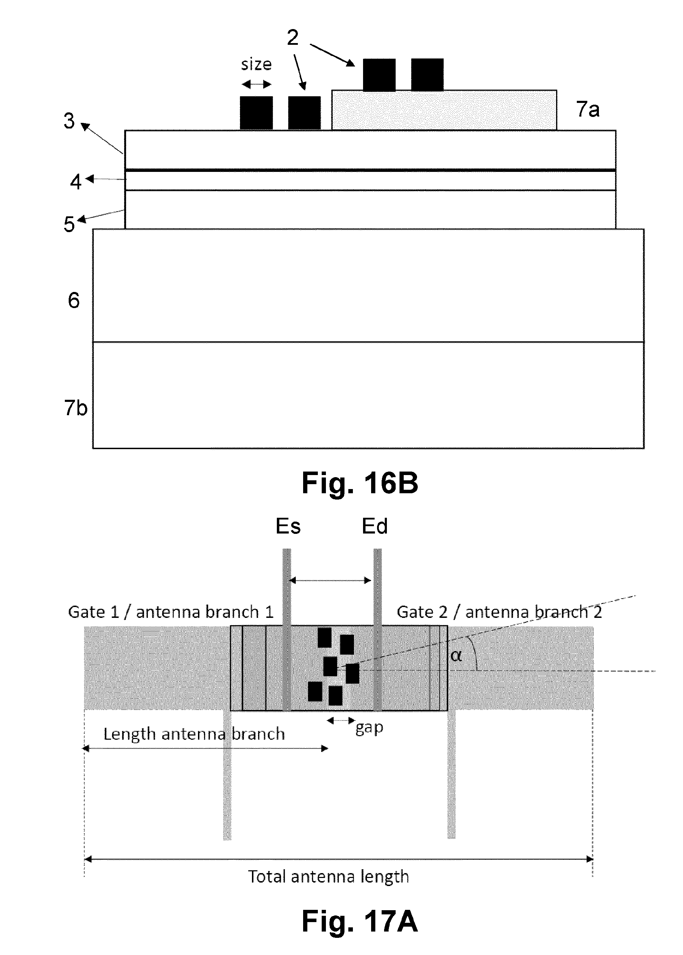

Figures 16A, B schematically show the optical fluid sensor of the first aspect of the present invention, for another variation of the Configuration 1 embodiment of the optical fluid sensor of the first aspect of the present invention, by means of a top view (A) and a side elevation view (B) of a cross-section of part of the components of a similar embodiment as that shown in that top view. Here, element 7a refers to a local top gate (which could or not be transparent for the incident light wavelength), whereas 7b refers to a back gate.

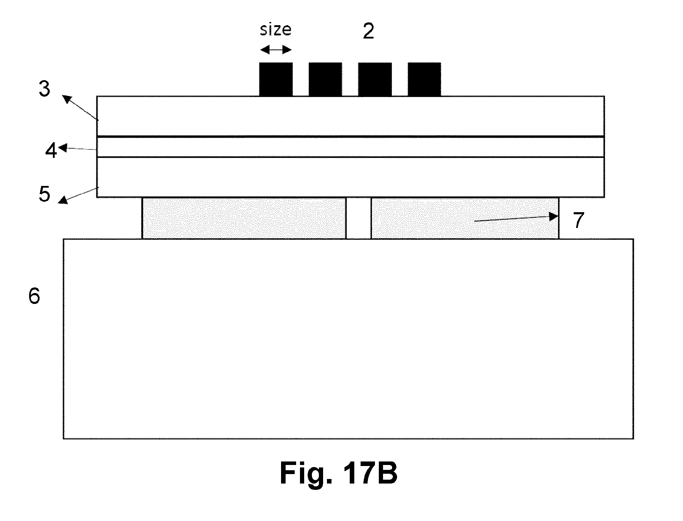

Figures 17A, B schematically show the optical fluid sensor of the first aspect of the present invention, for another variation of the Configuration 3 embodiment of the optical fluid sensor of the first aspect of the present invention, by means of a top view (A) and a side elevation view (B) of a cross-section of part of the components of a similar embodiment as that shown in that top view.

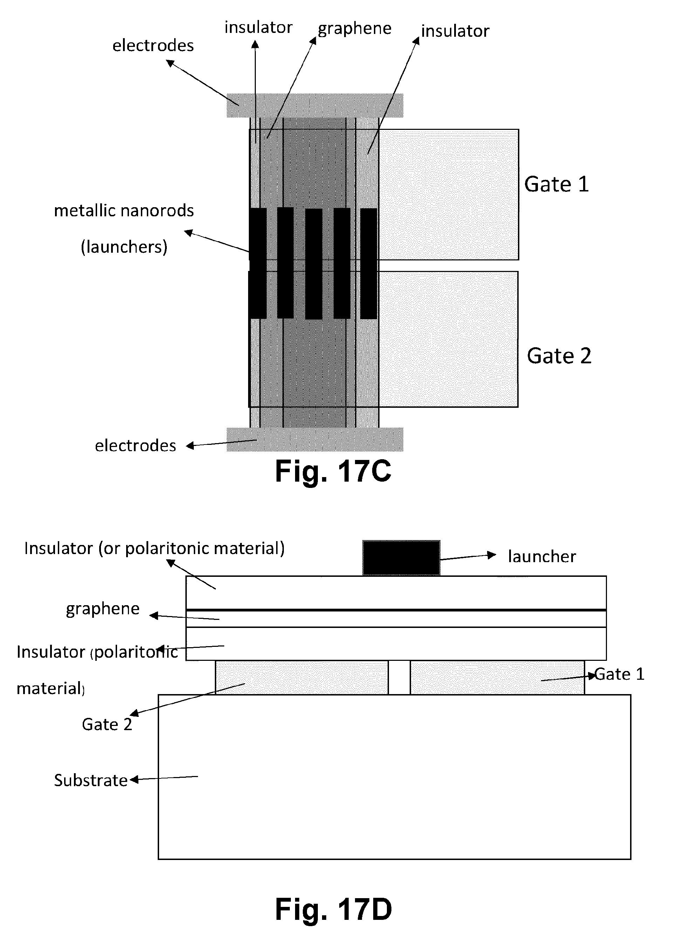

Figures 17C, D schematically show the optical fluid sensor of the first aspect of the present invention, for another variation of the Configuration 3 embodiment, in this case with resonant or non-resonant split gates, which depends on the length and width of the gates 7, with nanorods launchers 2.

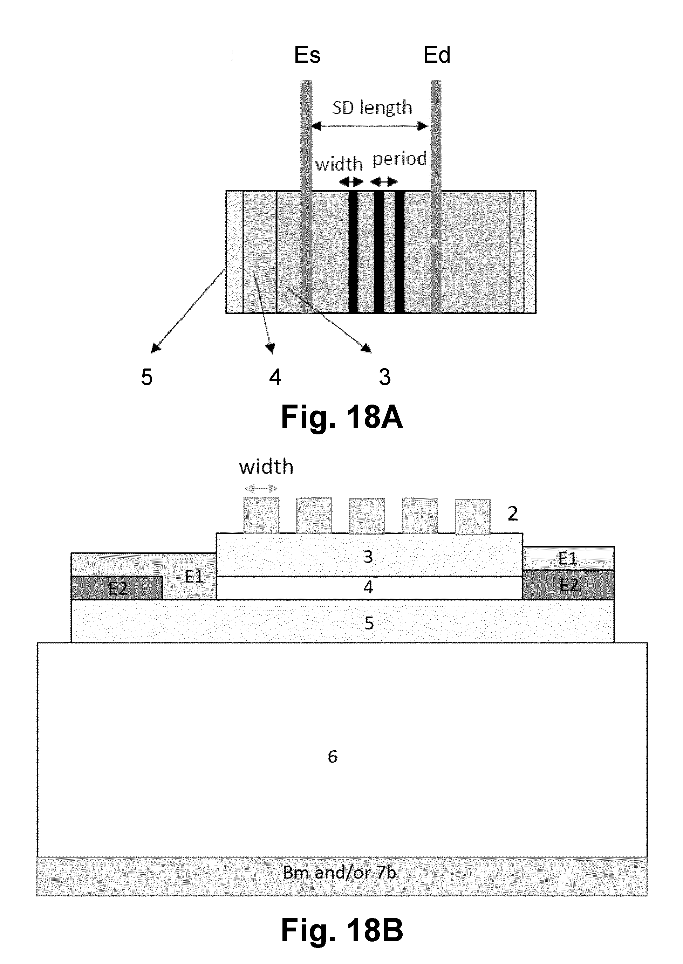

Figures 18A, B schematically show the optical fluid sensor of the first aspect of the present invention, for another variation of the Configuration 3 embodiment of the optical fluid sensor of the first aspect of the present invention, by means of a top view (A) and a side elevation view (B) of a cross-section of a similar embodiment as that of that top view.

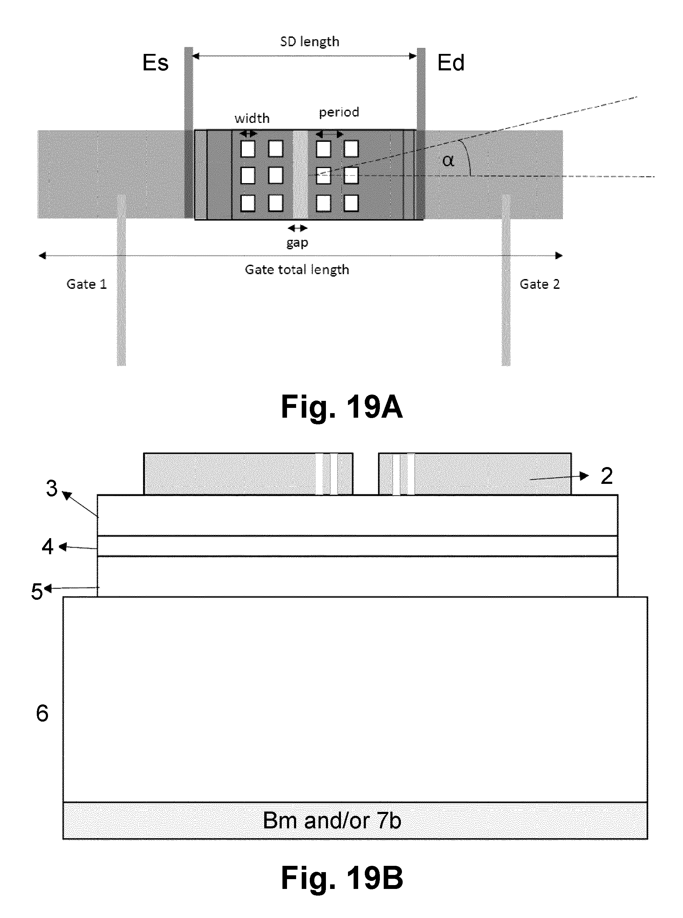

Figures 19A, B schematically show the optical fluid sensor of the first aspect of the present invention, for another variation of the Configuration 1 or 3 embodiments of the optical fluid sensor of the first aspect of the present invention, by means of a top view (A) and a side elevation view (B) of a cross-section of part of the components of a similar embodiment as that shown in that top view.

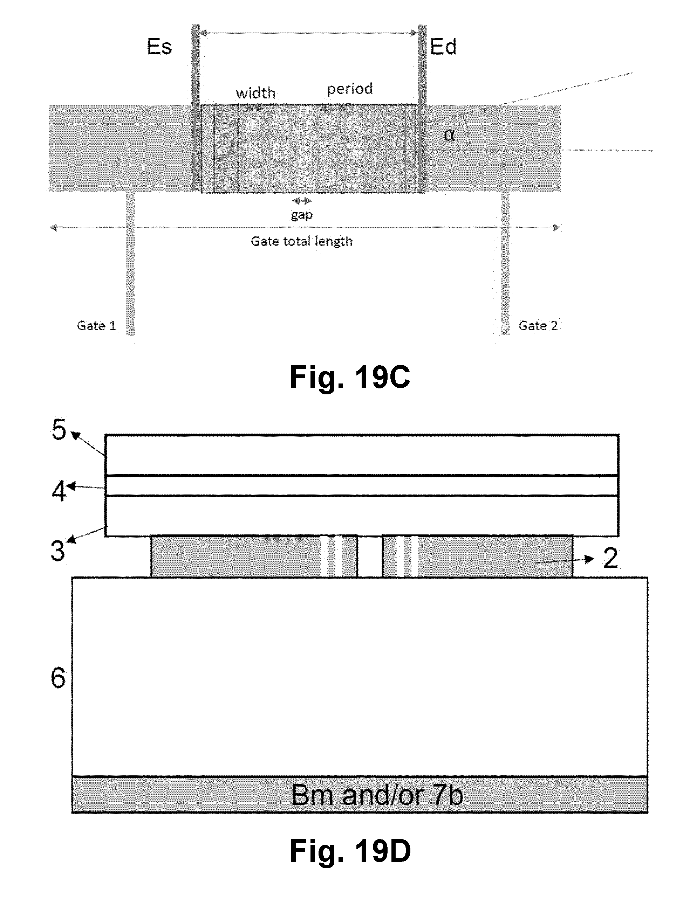

Figures 19C, D schematically show the optical fluid sensor of the first aspect of the present invention, for another variation of the Configuration 2 embodiment (although it could also be applied to the Configuration 4 embodiment) of the optical fluid sensor of the first aspect of the present invention, by means of a top view (A) and a side elevation view (B) of a cross-section of part of the components of a similar embodiment as that shown in that top view.

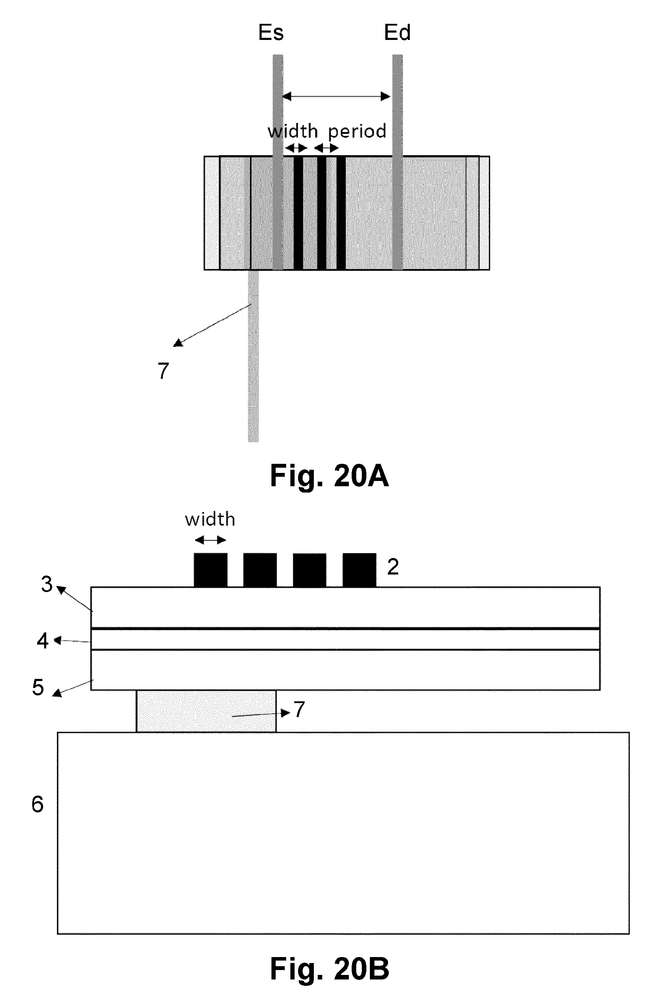

Figures 20A, B schematically show the optical fluid sensor of the first aspect of the present invention, for another variation of the Configuration 3 embodiment of the optical fluid sensor of the first aspect of the present invention, by means of a top view (A) and a side elevation view (B) of a cross-section of part of the components of a similar embodiment as that shown in that top view.

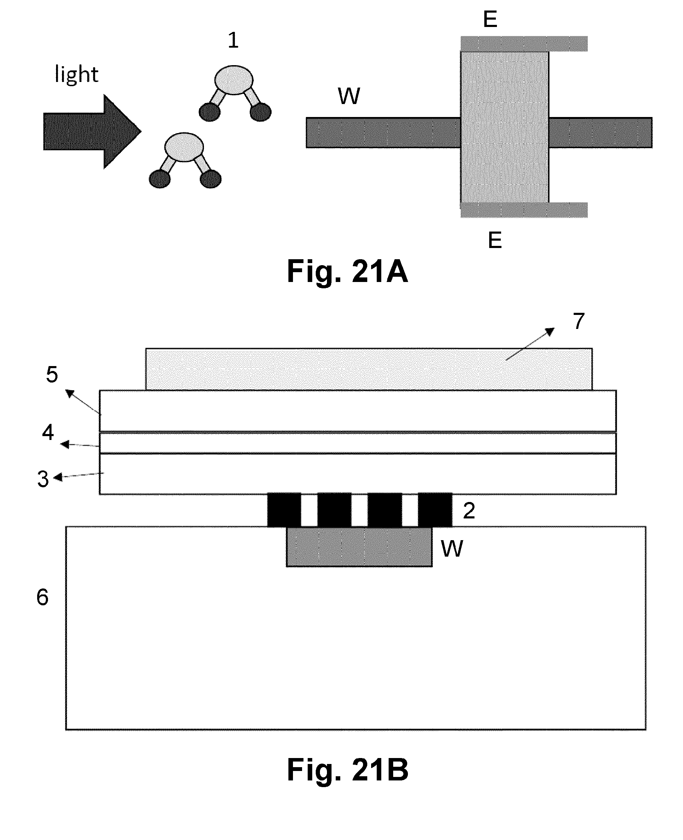

Figures 21A, B schematically show the optical fluid sensor of the first aspect of the present invention, for another variation of the Configuration 4 embodiment of the optical fluid sensor of the first aspect of the present invention, by means of a top view (A) and a side elevation cross-section view (B). In this case, the element "w" consists of an optical waveguide contained in the substrate to sustain the incident wavelength and guide towards the sensor's active region.

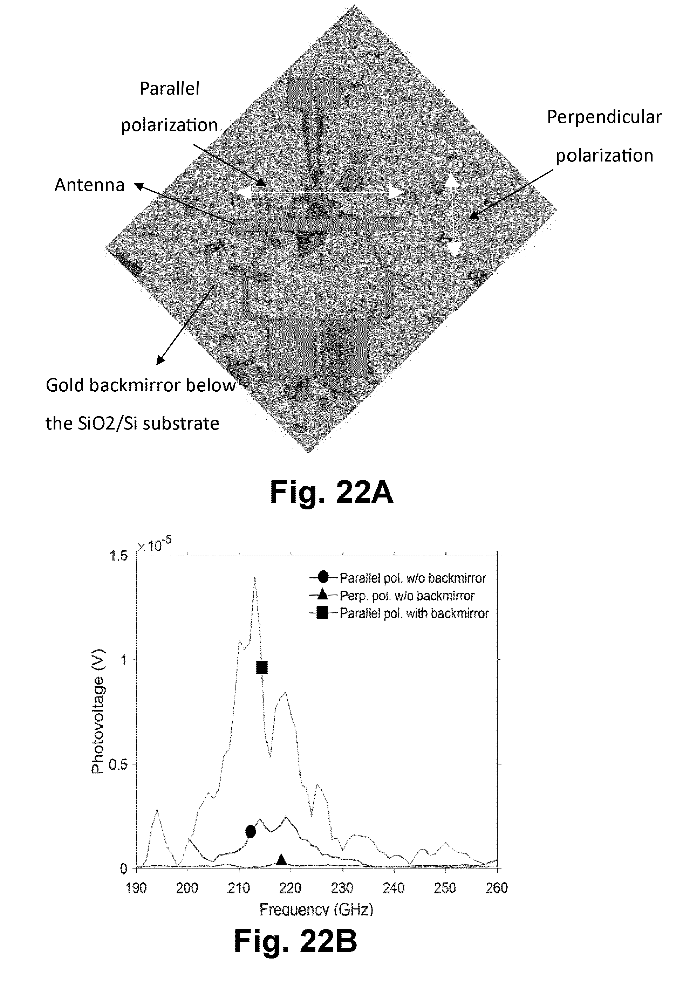

Figure 22A shows an optical image of a prototype of the optical fluid sensor of the first aspect of the present invention, built according to the Configuration 1 embodiment but modified as shown in Figure 7C, i.e. with a backmirror arranged under the substrate.
Figure 22B is a plot showing experimental results obtained with the prototype of Figure 22A, for a parallel polarization of the incoming light with respect to the launcher's main axis, and for a variation of that prototype without the backmirror, for parallel and perpendicular polarizations.

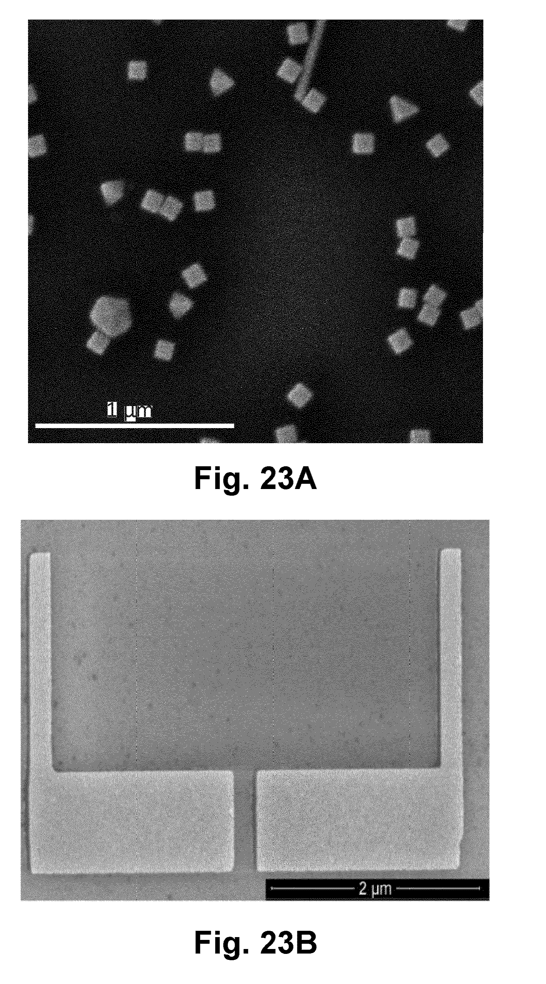

Figures 23A, B are pictures taken by a Scanning Electron Microscope (SEM) of the a) nanocubes launchers on top of a substrate as shown in Fig. 9b and b) of the split gate antenna launcher as shown in Fig. 9d and Fig. 2, to mention a few..

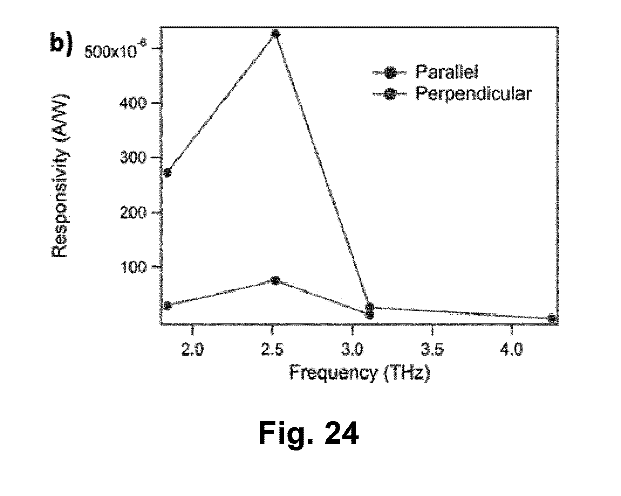

Figure 24 is a plot showing the responsivity spectra in the THz range of a device similar to the one shown in Fig. 22A, but with the antenna scaled (antenna total length of ~40 µm) to be resonant in this frequency range. In this case, we use a CVD graphene-based detector. We observe that the responsivity is enhanced significantly when the incident light polarization is parallel to the antenna's main axis, compared to the case when the antenna is not excited for the incident polarization oriented perpendicularly. We observe the same behaviour as in Fig. 22B, but for the THz frequency range.

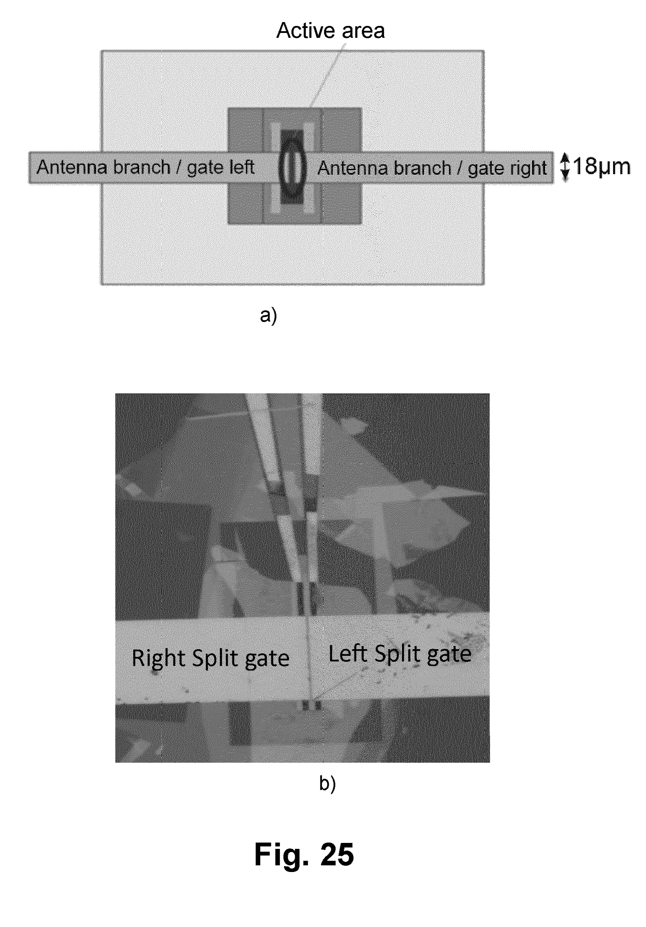

Figure 25 shows: a) a top view of the optical fluid sensor of the first aspect of the present invention, for an embodiment like that of Figure 8B but without the use of the backgate, where the launcher elements act as local gates and are made, for example, of gold, the optoelectronic active material stack of graphene sandwiched between top and bottom hBN structures, and the substrate, for example, of SiO₂ and silicon; b) an optical image of a prototype built according to that embodiment.

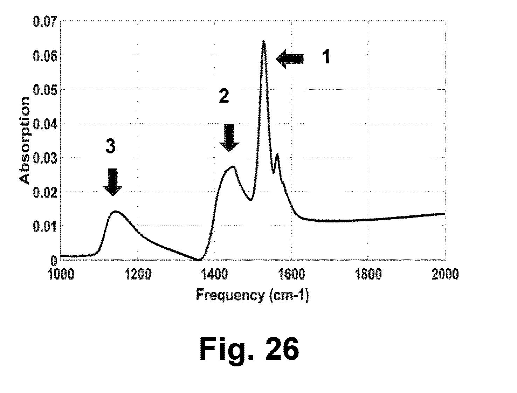

Figure 26 is a plot showing simulation results, particularly the absorption spectrum of graphene, obtained with the sensor of Figure 25 view a).

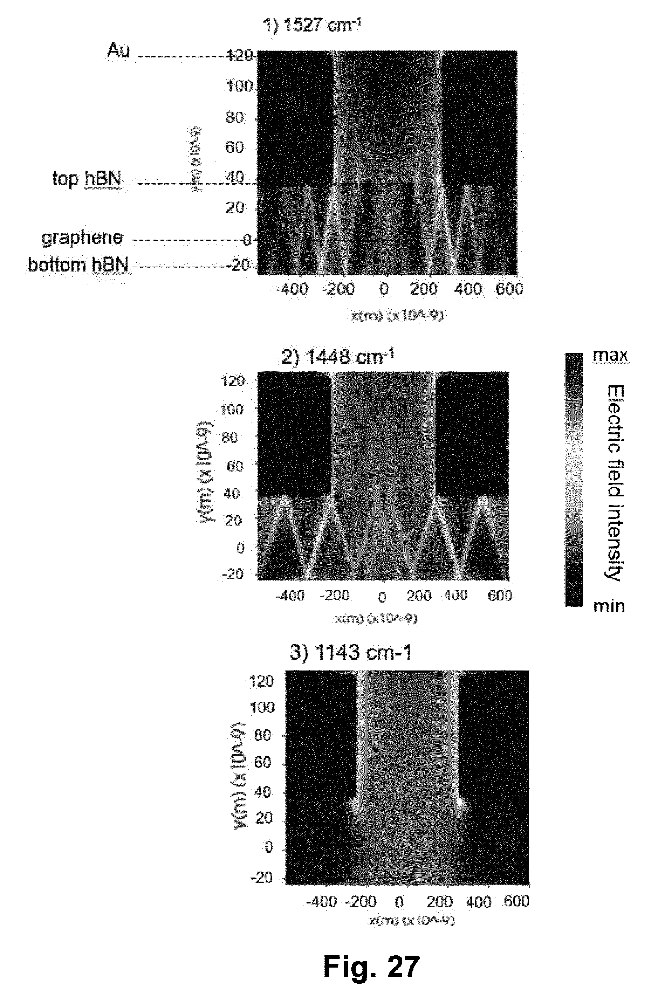

Figure 27 are three plots showing simulation results obtained with the prototype of Figure 25 view b), particularly showing the cross-sectional view of Electric field intensity, for the three polaritonic modes shown by the peaks shown in the plot of Figure 26, at frequencies: 1) 1527 cm⁻¹, 2) 1448 cm⁻¹, and 3) 1143 cm⁻¹.

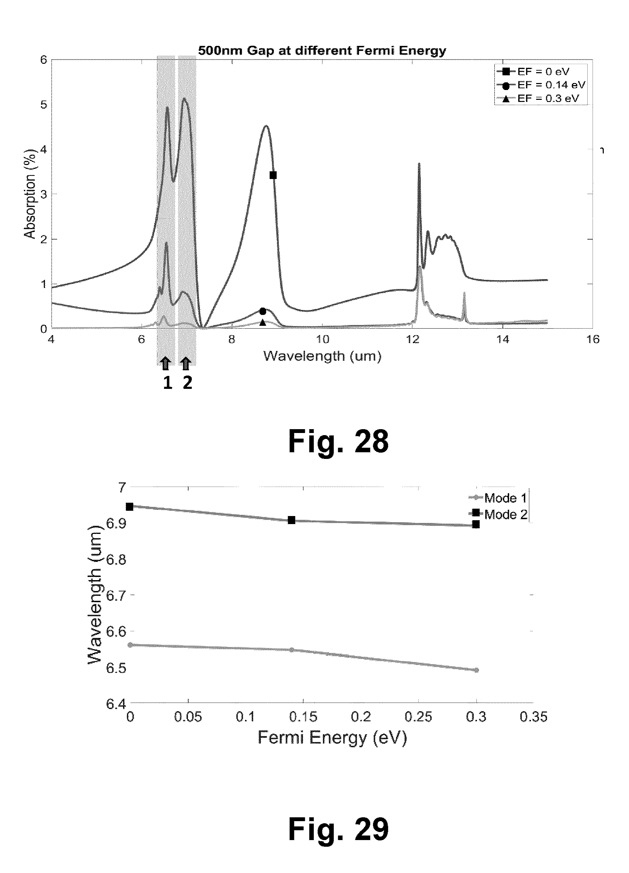

Figure 28 is a plot showing simulation results, particularly the absorption spectrum of graphene obtained with the sensor of Figure 25 view a), for a gap between the launcher elements of 500 nm at different Fermi energies.
Figure 29 is a plot showing simulation results, particularly the wavelength versus the Fermi energy with the sensor of Figure 25 view a), for two polaritonic modes. The figure shows a shift of the polaritonic mode's spectral position when increasing the Fermi energy.

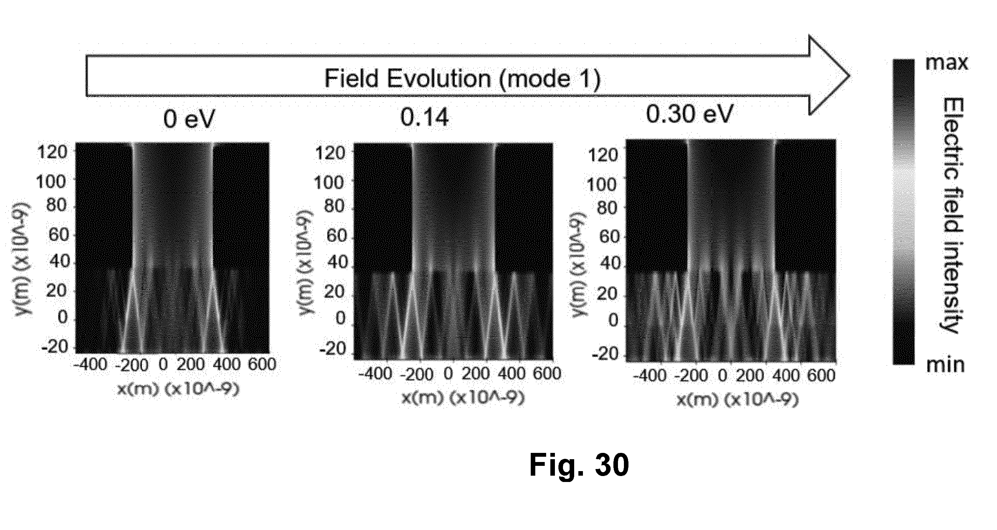

Figure 30 is a plot showing simulation results obtained with the prototype of Figure 25 view b), particularly showing the cross-sectional view of Electric field intensity, for the three Fermi energies of Figure 28 and for polaritonic mode 1 of Figure 29.

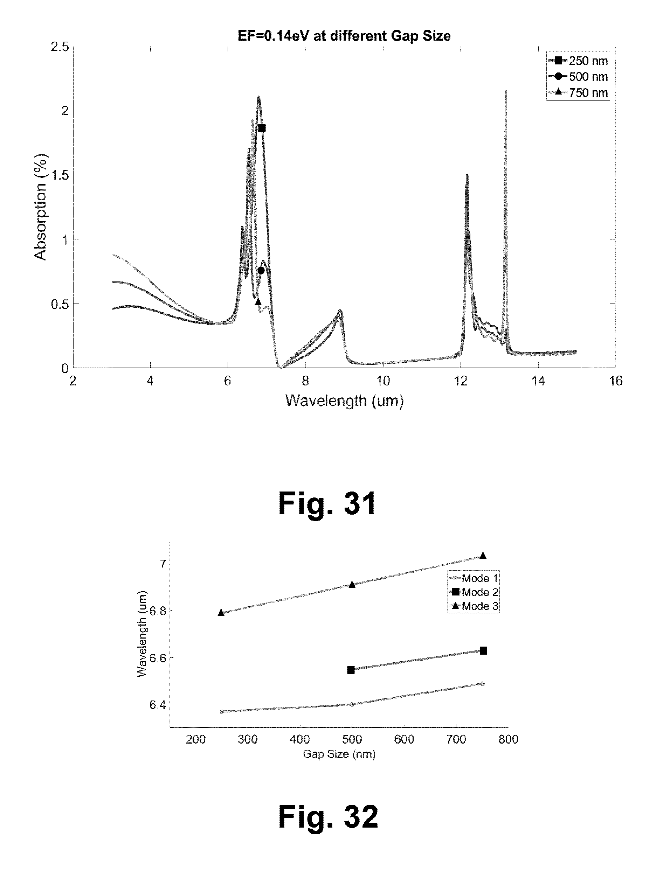

Figure 31 is a plot showing simulation results, particularly the absorption spectrum of graphene obtained with the sensor of Figure 25 view a), for a Fermi energy of 0.14 eV and at different sizes for the gap present between the launcher elements.
Figure 32 is a plot showing simulation results, particularly the wavelength versus the gap size with the sensor of Figure 25 view a), for three polaritonic modes.

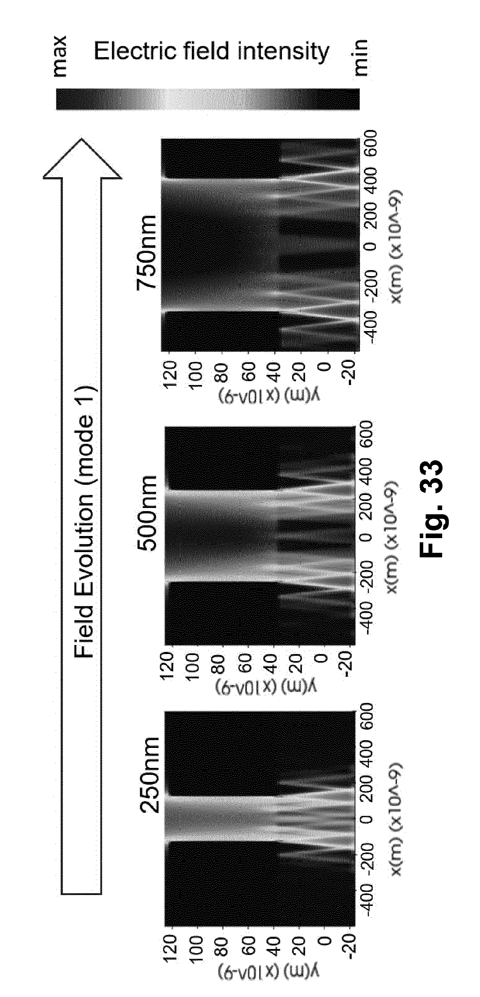

Figure 33 is a plot showing simulation results obtained with the prototype of Figure 25 view b), particularly showing the cross-sectional view of Electric field intensity, for the three gap sizes of Figure 31 and for polaritonic mode 1 of Figure 32.

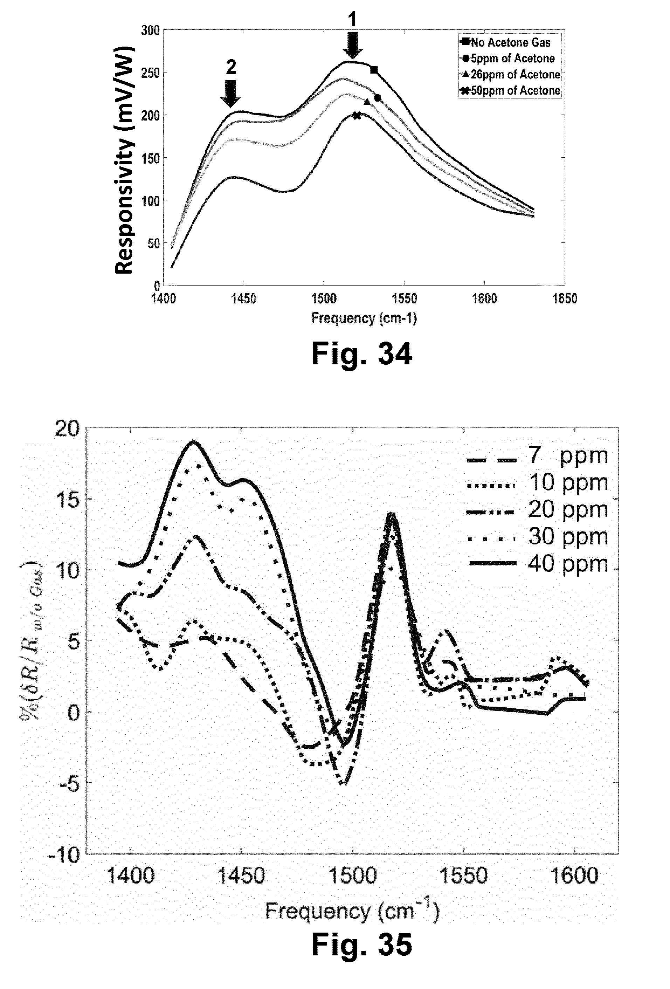

Figure 34 is a plot showing experimental results obtained with the prototype of Figure 25 views a) and b), particularly showing the responsivity versus frequency, for different concentrations of Acetone gas and for not Acetone gas at all, where peaks 1 and 2 occur at the same frequency as peaks 1 and 2 shown in Figure 26.
Figure 35 is a plot showing experimental results obtained with the prototype of Figure 25 view b), particularly showing the normalized photoresponse with and without acetone gas divided by the spectra without acetone gas obtained experimentally, versus frequency, for different concentrations of Acetone gas.

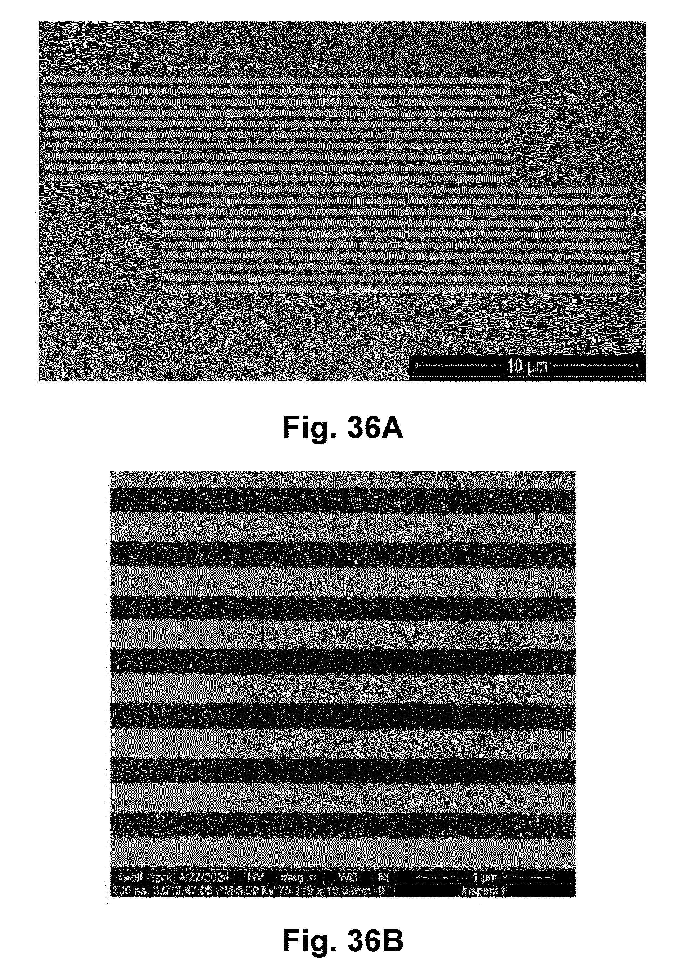

Figure 36A and B are pictures taken by a Scanning Electron Microscope (SEM) of the a) metallic nanorods launchers on top of a substrate as shown in Fig. 9a, Fig. 2 and Fig. 14A-B, to mention a few. b) Amplified area showing the metallic nanorods.

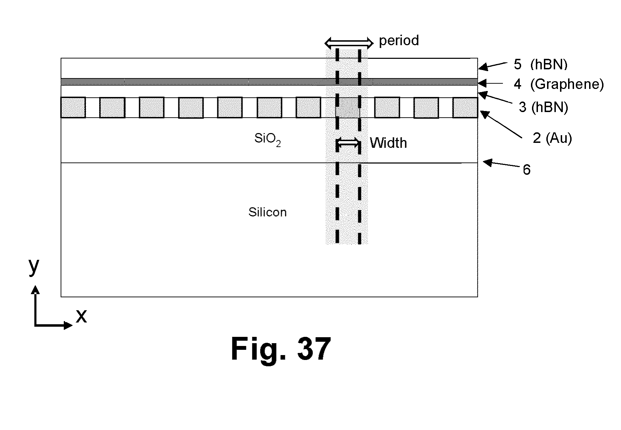

Figure 37 schematically show the optical fluid sensor of the first aspect of the present invention, for an embodiment similar to that of Figure 14B with a SiO₂/Silicon substrate.

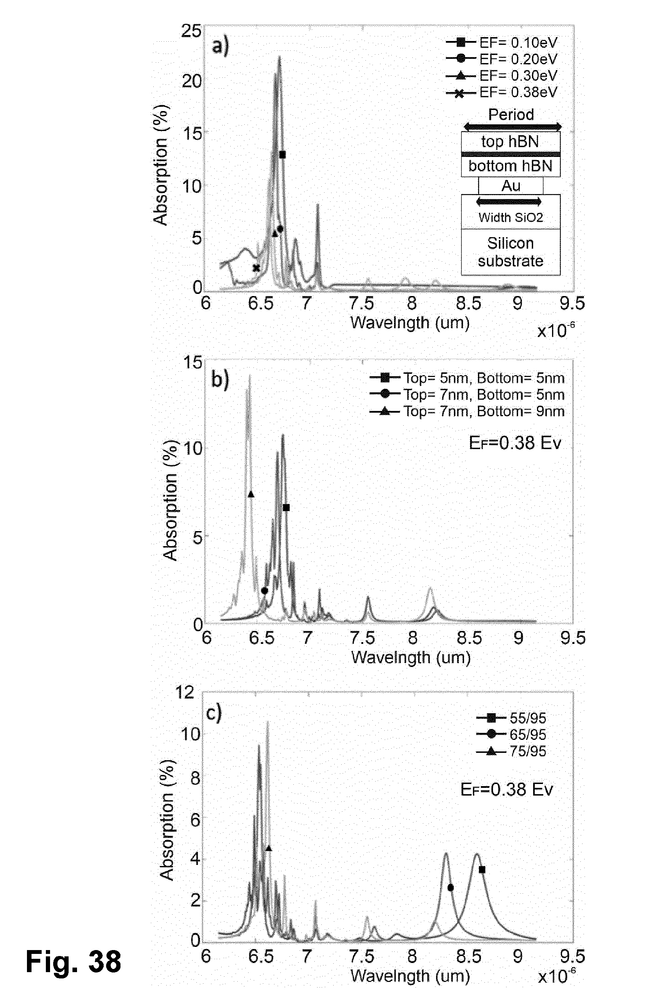

Figure 38 are three plots showing simulation results: a) different Fermi energies, with the sensor schematically depicted in the inset of the plot; with the sensor of Figure 37, b) different thicknesses for the top and bottom structures for a Fermi energy of 0.38 eV, c) different periods (gap between the metal nanorods/width of the metal nanorods) for a Fermi energy of 0.38 eV.

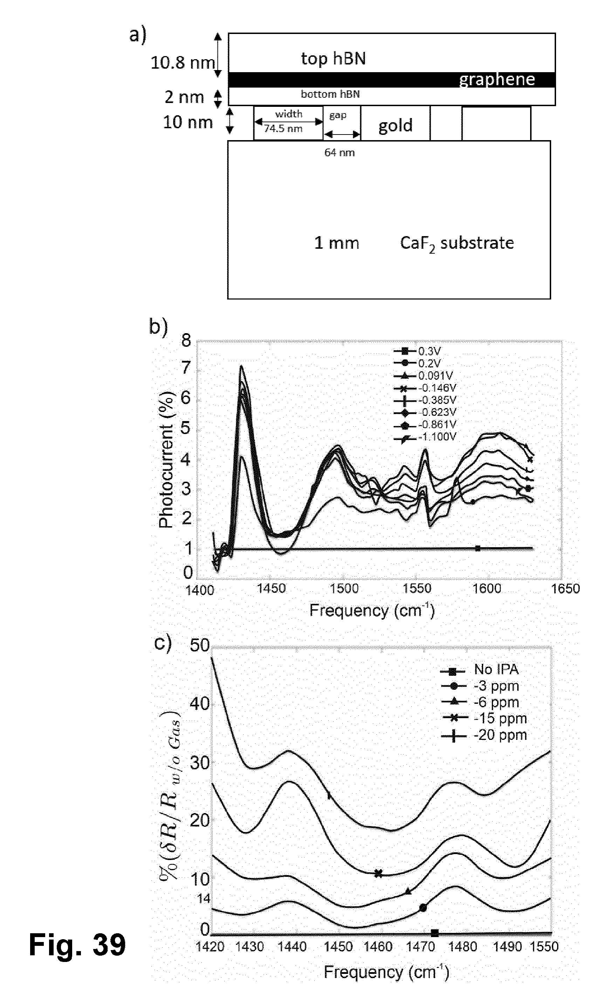

Figure 39. a) schematically show the optical fluid sensor of the first aspect of the present invention, for an embodiment similar to that of Figure 37 with a CaF₂ substrate; b) and c) are plots showing experimental results obtained with a prototype built according to view a), particularly: b) photocurrent spectra for several gate voltages; c) normalized photoresponse for several 2-isopropanol (IPA) gas concentrations.

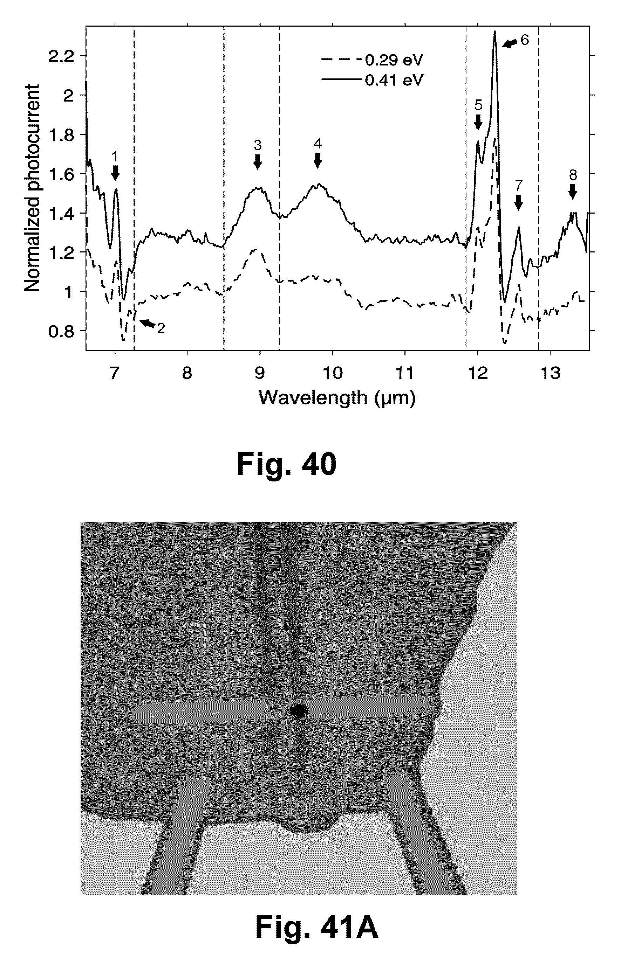

Figure 40. Electrical spectroscopy measurements. We show the normalized photocurrent spectrum of the optical fluid sensor with the same cross section as the one shown in Figures 14A-B and 39 at two Fermi energies. The photocurrent spectra are normalized to the spectrum at graphene's charge neutrality point (CNP). The polaritonic peaks are labelled by the arrows. The highlighted spectral regions in gray correspond to the upper and lower Reststrahlen bands (RBs) of hBN and in light gray to the SiO₂ RB. The curves are offset for clarity.

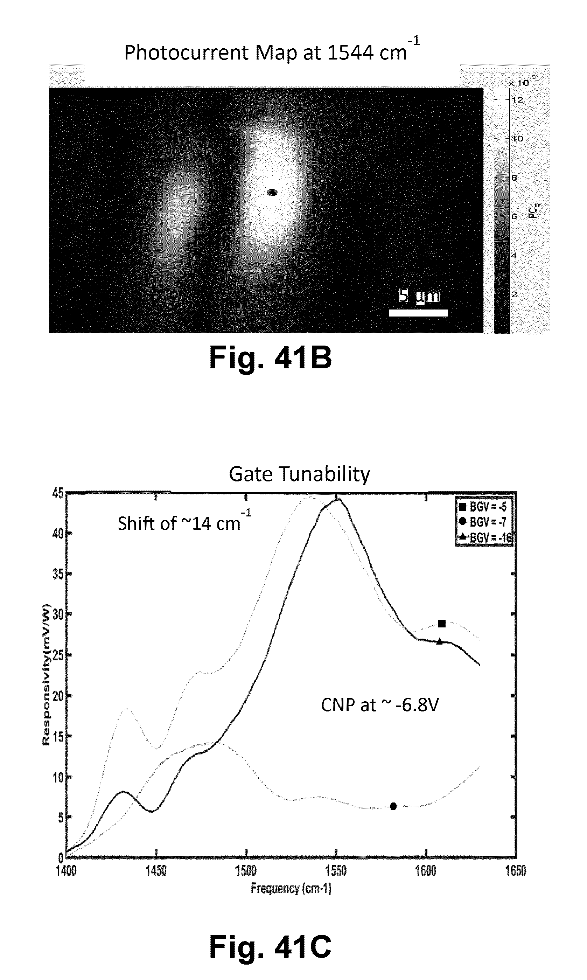

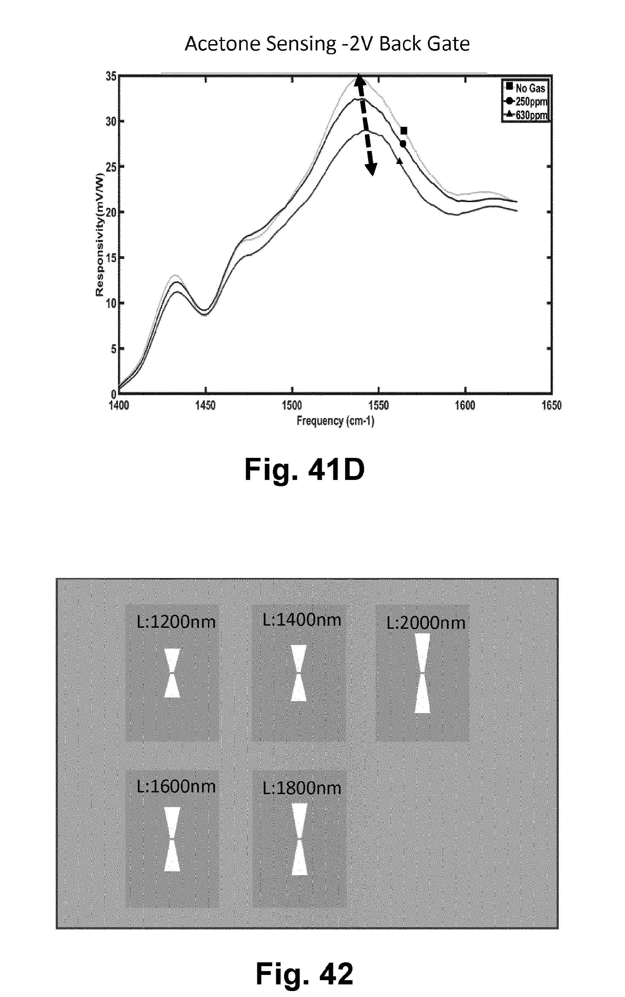

Figure 41. A) optical image of a prototype built according to a configuration like that of Figure 18B but with only one of the launcher elements there shown. B) photocurrent map experimentally obtained on the prototype at 1544 cm-¹, C) plot showing experimentally obtained responsivity vs frequency when changing the backgate tuning voltage of the prototype; D) plot showing experimentally obtained responsivity vs frequency with a fixed -2V backgate voltage applied to the prototype, at different Acetone gas concentrations.
Figure 42 schematically shows an embodiment an optical fluid sensor arrangement of the second aspect of the present invention, particularly comprising an array of the optical fluid sensor of the first aspect of the invention. For clarity's sake, only the launcher elements are shown, which consist of bow tie antennas with different lengths.

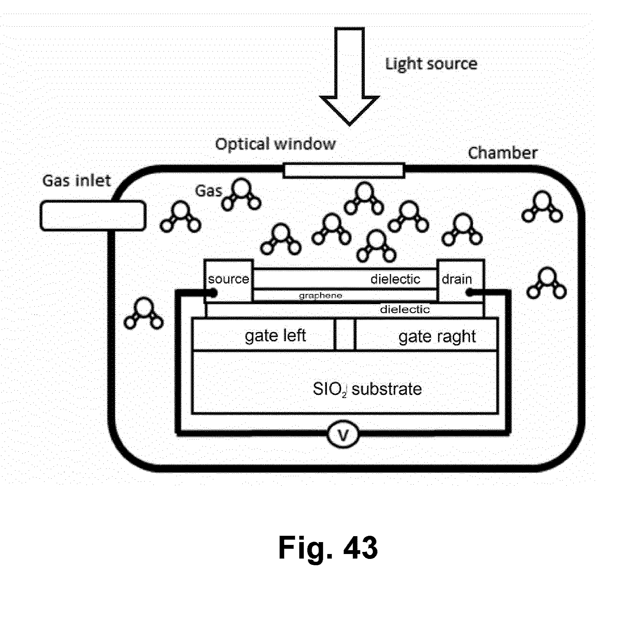

Figure 43 is a schematic of a setup including the optical fluid sensor of the first aspect of the present invention: graphene is placed on top of two patterned gates, which act at the same time as gating electrodes and polaritons launchers. The polaritonic spectrum is probed all-electrically, with and without the studied gas.

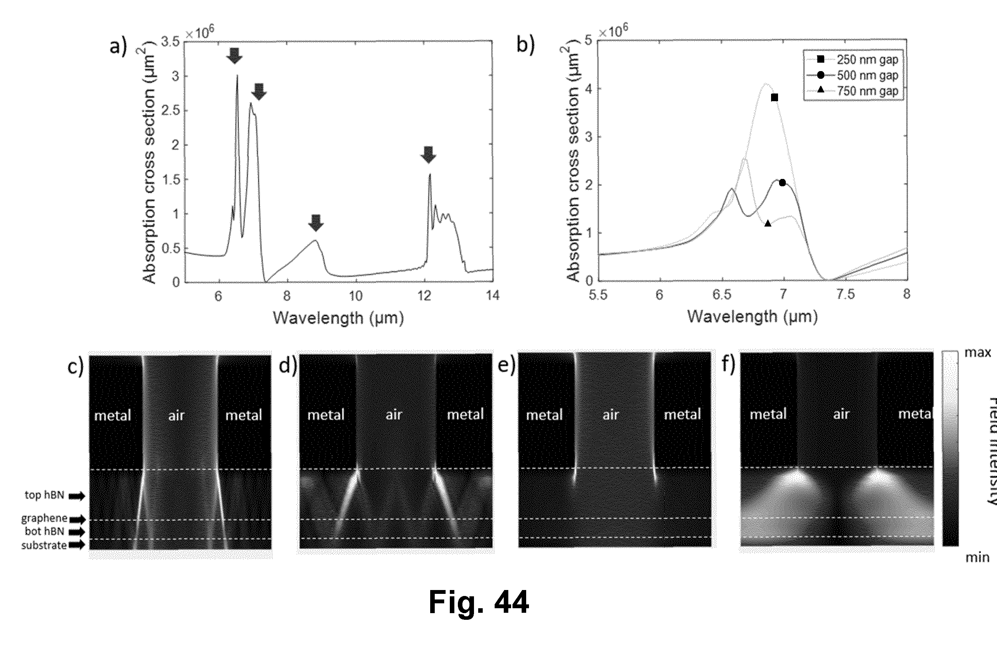

Figure 44 shows the following plots: a) Absorption cross section in the infrared range (5-14 µm) of the sensor geometry consisting of top split gates with hBN dielectric layers encapsulating graphene. The substrate is silicon oxide on top of low doped silicon. b) Same as panel a), but with for different size of the gap of the split gate. In this case, it is shown mainly the upper Reststrahlen band of hBN spectral region. c-f) Field intensity cross section view of the mentioned design geometry at the spectral positions highlighted in red arrows in panel a corresponding to c) 6.54 µm, d) 7.06 µm, e) 8.80 µm and f) 12.14 µm.

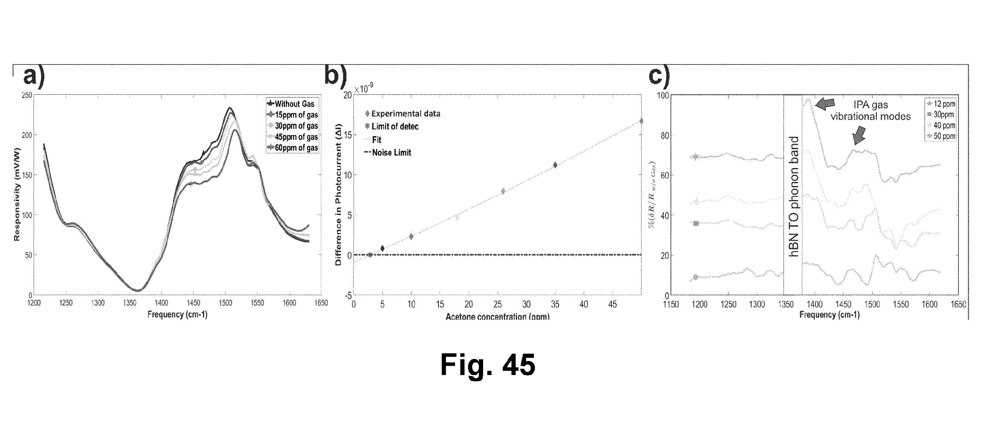

Figure 45 shows the following plots: a) Responsivity of the gas sensor with acetone concentration (main changes in photoresponse occur where the polaritons are spectrally located at 1400-1600 cm-1). b) Differential photocurrent for different acetone gas concentration with 2.8 ppm of LOD/sensitivity of a non-optimized sensor c) Normalized differential responsivity spectrum for different IPA gas concentrations (curves are shifted for illustration).

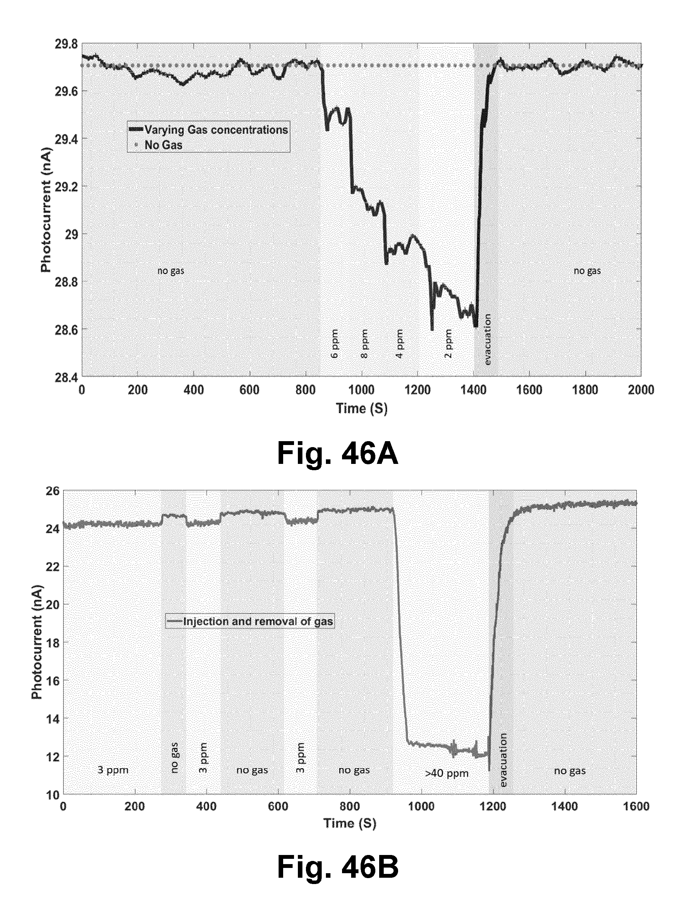

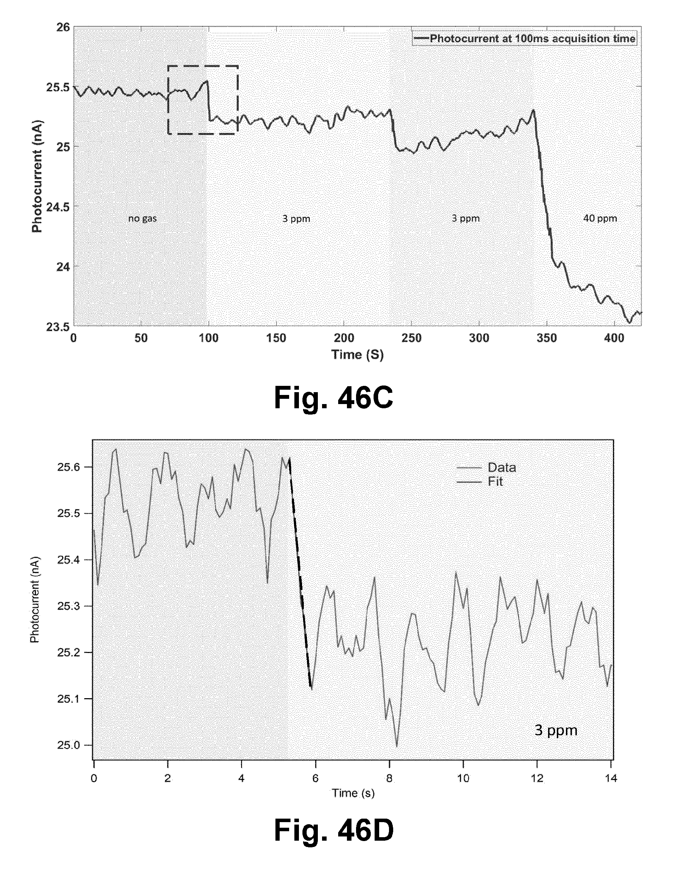

Figure 46 shows the following plots: A) Time-resolved measurements for monitoring the photoresponse with several injections of acetone gas at small concentrations (few ppm level), which are highlighted in different grey areas. The injections are followed by an evacuation step of the acetone gas with a pump. The data acquisition time is 300 ms. B) Time resolved measurements to track the reusability of the sensor by injecting and pumping several cycles of acetone gas. The data acquisition time is 300 ms. C) Time-resolved measurements with a data acquisition time of 100 ms (3 times faster than panel a and b). Here, different acetone gas injections are indicated in different grey areas. D) Time resolved measurements of the highlighted region in panel c. Here it is shown the fit (dashed line) corresponding the fall time due to a gas injection of 3 ppm concentration. We obtain a detection time of 0.9 second.

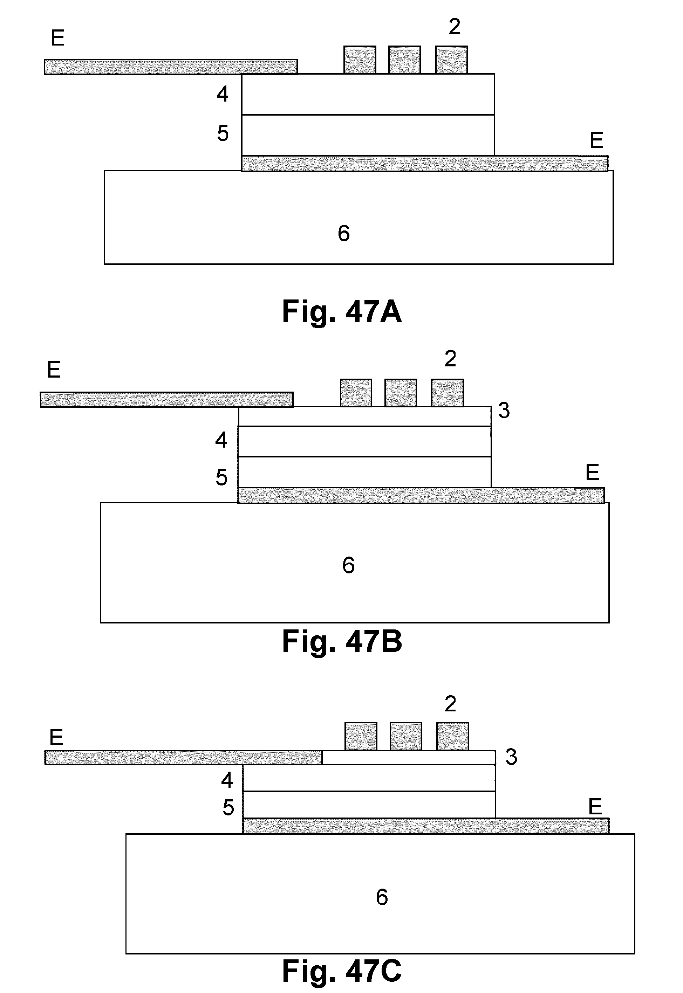

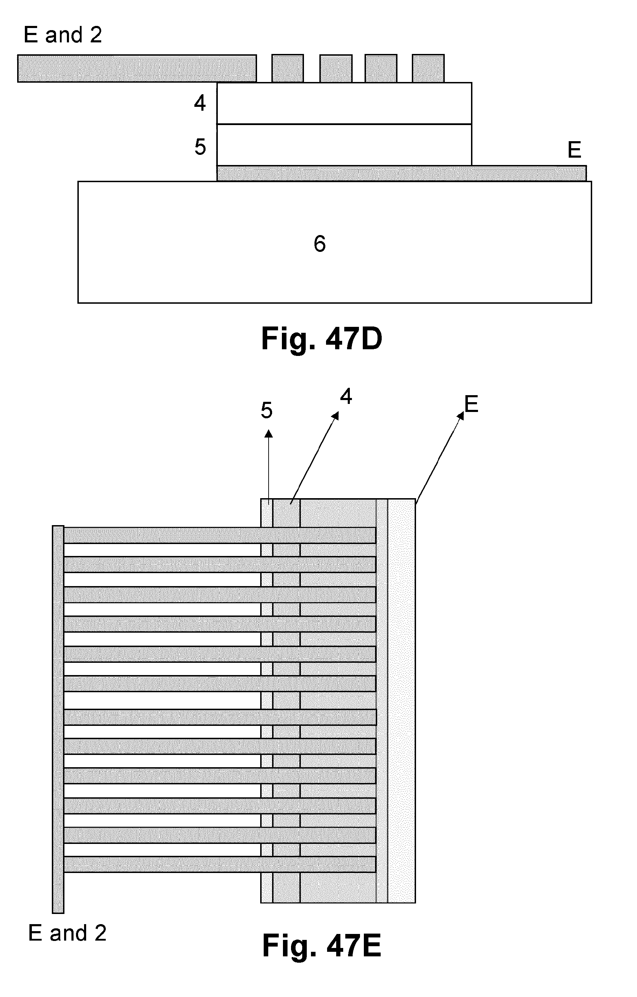

Figure 47 schematically shows different variants of another embodiment of the optical fluid sensor of the first aspect of the present invention, for an out-of-plane carrier extraction device configuration. A) Side view for a configuration for which the optoelectronic stack comprises two electrically active structures, at least one of them being made of a polaritonic material, top and bottom electrodes and a polaritonic launcher. B) Side view for a configuration differing from A) in that there is an additional polaritonic material structure placed under the top electrode and the polaritonic launcher. C) Side view for a configuration differing from B) in that the additional polaritonic material structure is placed only under the polaritonic launcher, in the same plane as the top electrode. D) Side view for a configuration differing from A) in that the same elements act as both top electrodes and polaritonic launchers. E) Top view of the configuration shown in D).

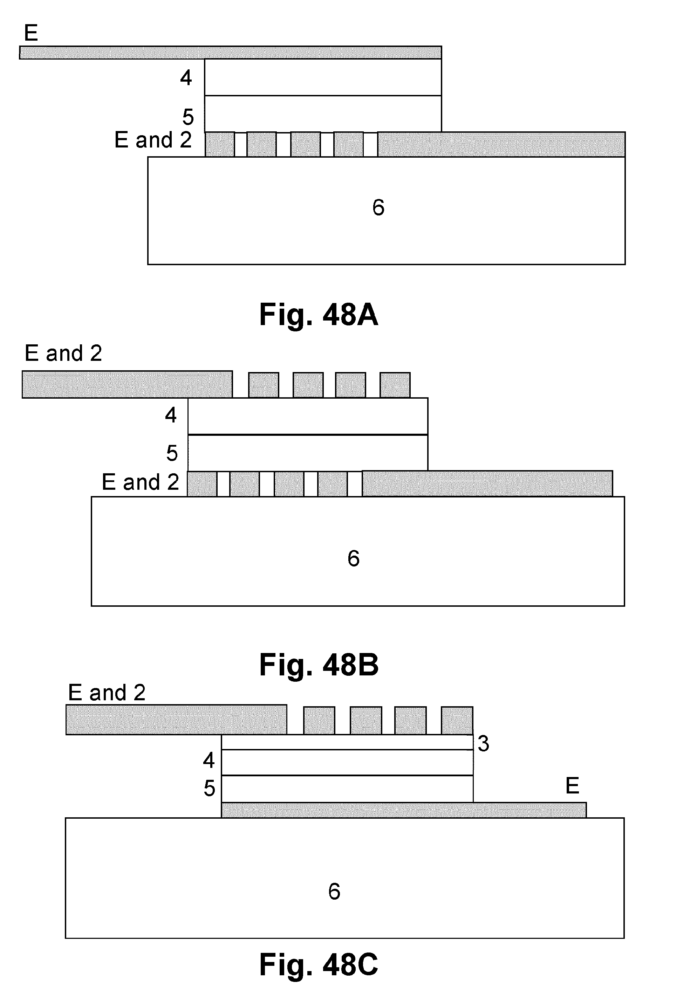

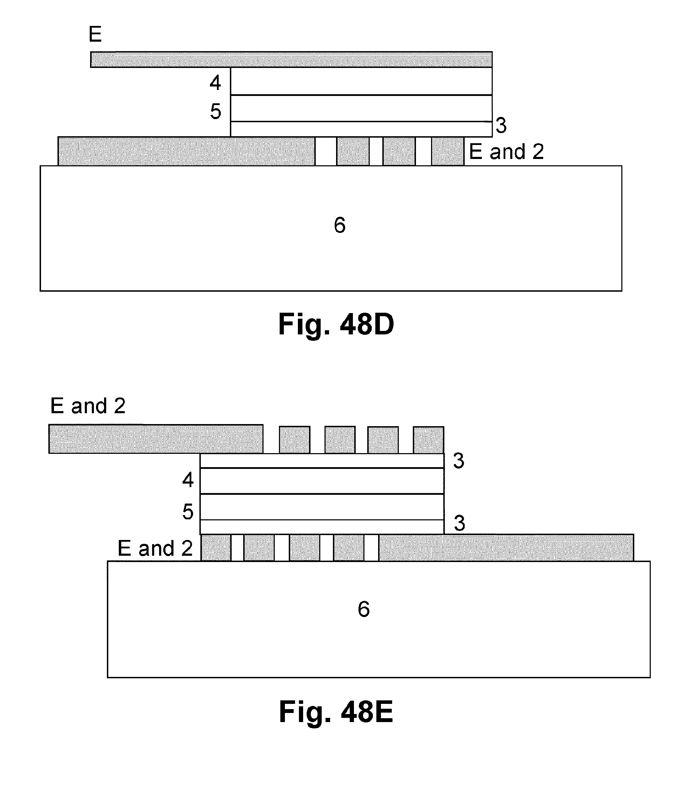

Figure 48 schematically shows different variants of another embodiment of the optical fluid sensor of the first aspect of the present invention, also for an out-of-plane carrier extraction configuration. A) Side view for a configuration differing from Figure 47A in that the same elements act as both bottom electrodes and polaritonic launchers. B) Side view for a configuration differing from A) in that the same elements act as both top electrodes and polaritonic launchers. C) Side view for a configuration differing from Figure 47D in that there is an additional polaritonic material structure placed under the elements acting as top electrodes and polaritonic launchers. D) Side view for a configuration differing from A) in that there is an additional polaritonic material structure placed over the elements acting as bottom electrodes and polaritonic launchers. E) Side view for a configuration differing from B) in that there is two additional polaritonic material structures, one placed over the elements acting as bottom electrodes and polaritonic launchers and another one placed under the elements acting as top electrodes and polaritonic launchers.

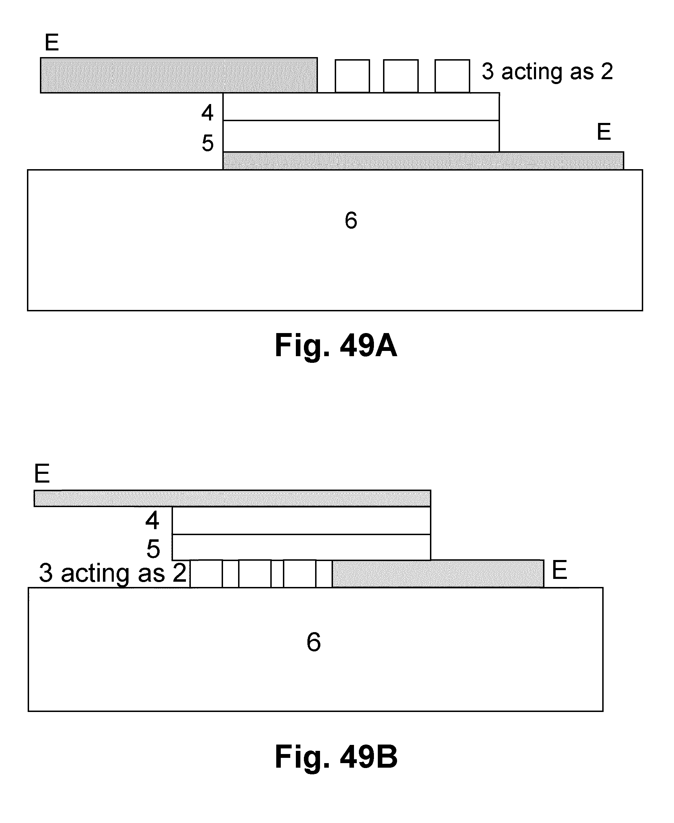

Figure 49 schematically shows different variants of another embodiment of the optical fluid sensor of the first aspect of the present invention, also for an out-of-plane carrier extraction configuration. A) Side view for a configuration differing from Figure 47A in that instead of the polaritonic launchers there is a patterned polaritonic material which acts as a polaritonic launcher for the structures below. B) Side view for a configuration differing from A) in that the patterned polaritonic material is placed on the side next to the bottom electrode and acts as a polaritonic launcher for the structures above.

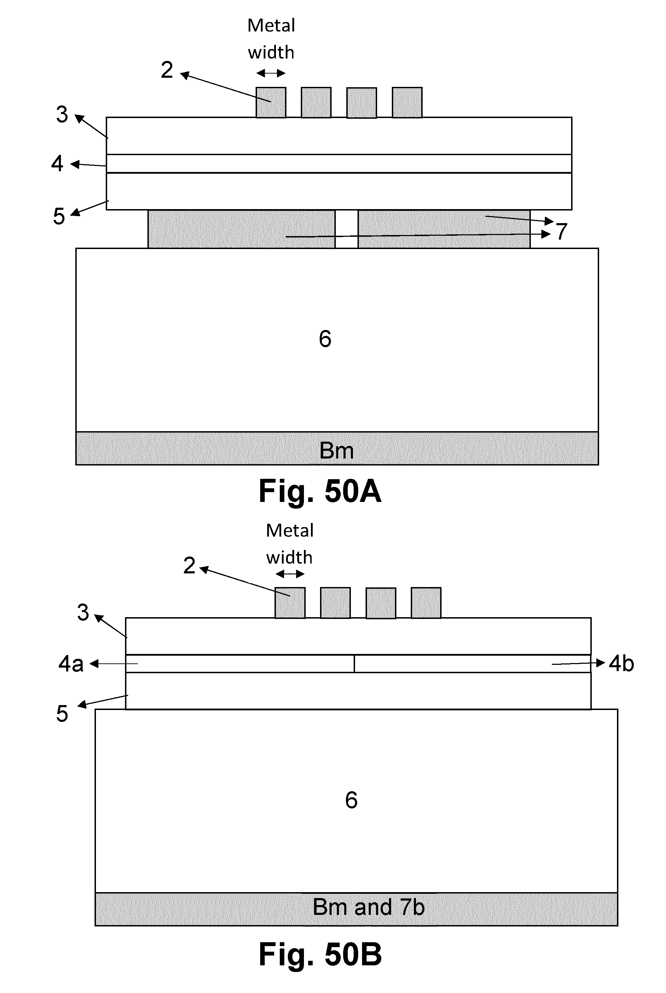

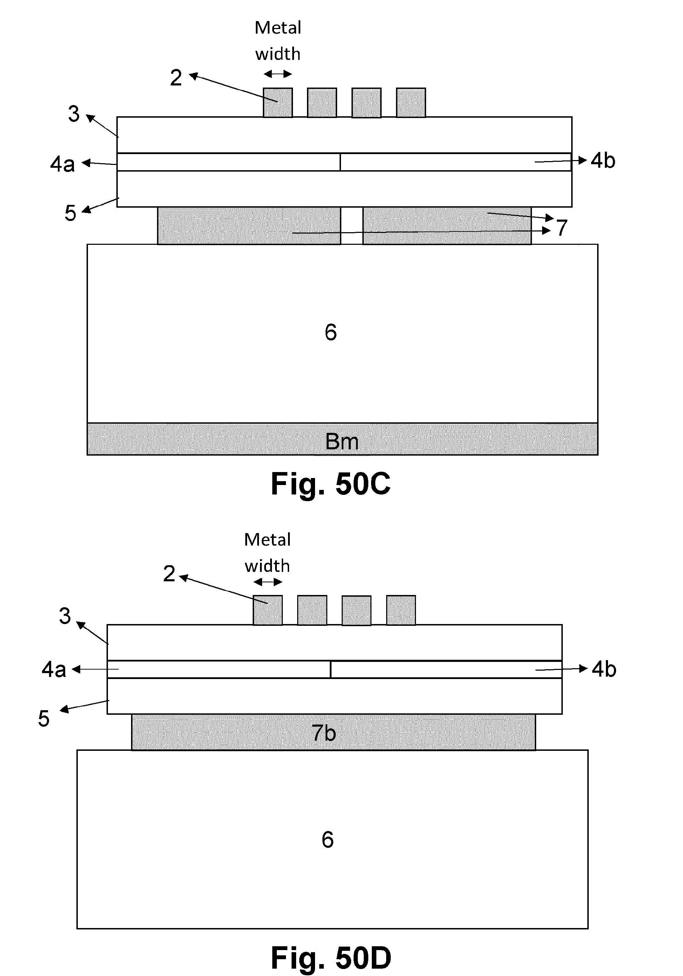

Figure 50 schematically shows different variants of an embodiment of the optical fluid sensor of the first aspect of the present invention, including different types of lateral junctions. They can be applied also to Configurations 1, 2, 3 and 4 embodiments. A) Side view for a configuration for which a homojunction is created in a channel formed with the same material. B) Side view for a configuration for which a heterojunction is created in a channel formed with different materials. C) Side view for a configuration differing from that of B) in that local gates are included for actively controlling a tuneable doping level. D) Side view for a configuration differing from that of B) in that a backgate is included for actively controlling a tuneable doping level.

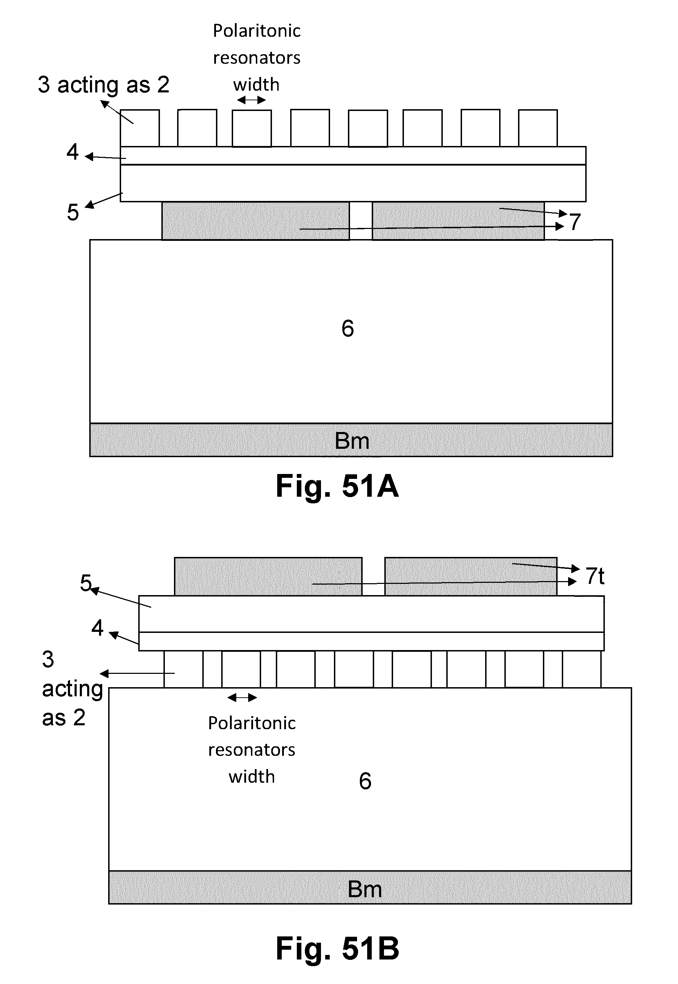

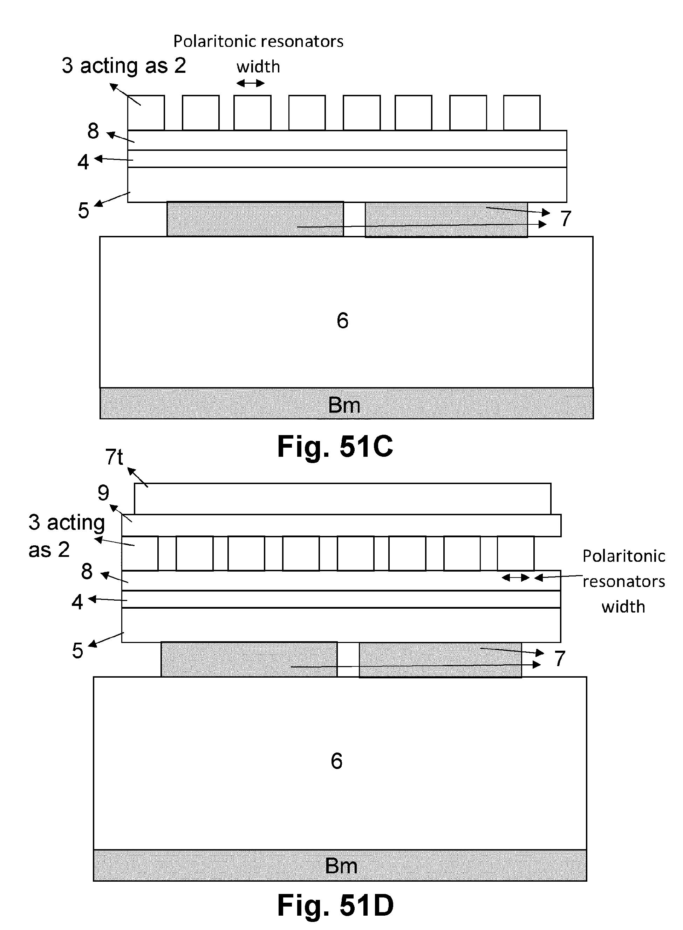

Figure 51 schematically shows different variants of an embodiment of the optical fluid sensor of the first aspect of the present invention, including patterned polaritonic material acting as polaritonic launchers. They can be applied also to Configurations 3 and 4 embodiments. A) Side view for a configuration for which the patterned polaritonic material is also an insulator and is placed on top. B) Side view for a configuration for which the patterned polaritonic material is also an insulator and is placed on the substrate and two transparent local gates are placed on top. C) Side view for a configuration differing from that of A) in that the patterned polaritonic material is a semimetal or semiconductor and is placed on a further dielectric and/or polaritonic material structure. D) Side view for a configuration differing from that of C) in that a further insulator structure and top transparent gate is placed on the patterned polaritonic material.

### DESCRIPTION OF THE PREFERRED EMBODIMENTS

In the present section, several embodiments of the optical fluid sensor and optical fluid sensor arrangement of the present invention will be described, together with simulation and/or experimental data obtained with implementations of some of those embodiments, which show a high responsivity and therefore sensitivity achieved with the present invention by optimizing the thermoelectric parameters, carrier collection and absorption enhancement. Moreover, other low dimensional materials that present longer polariton lifetime and strong interaction with molecules of gases or fluids are exploited. Due to the above mentioned, the present inventors demonstrate a sensitivity value of 2.8 ppm and that by exploiting the listed designs this value can be further improved.

The main four types of configuration embodiments of the optical fluid sensor of the first aspect of the present invention described in a previous section are shown in Figures 1 to 4, for all of which the optical fluid sensor comprises, integrated into a common chip:
- a substrate 6;
- an optoelectronic active material stack arranged over the substrate 6, intended to be exposed to a fluid or to an intermediate element (not shown) exposed to said fluid, and comprising:
   - a first dielectric and/or polaritonic material structure 5;
   - an electrically active material structure 4 (such as made of graphene) arranged over said first dielectric and/or polaritonic structure 5; and
   - a second dielectric and/or polaritonic material structure 3 arranged over said electrically active material structure 4;
wherein at least one of the structures 3, 4, 5 is made of a polaritonic material (such as hBN or MoO₃);
- circuitry in electrical contact with the electrically active material structure 4; and
- a polaritonic launcher 2 (e.g. metal) configured and arranged to, upon illumination, launch polaritons into the optoelectronic active material stack to propagate there across.

The circuitry (such as that shown in Figure 6C) together with the electrically active material structure 4 are configured and arranged to sense the fluid by transducing those optical interactions into an electrical signal representing a change in a property of the polaritons.

The optoelectronic active material stack is configured and arranged so that, when exposed to the fluid or to the intermediate element exposed to the fluid, the polaritons optically interact with one or more molecular and/or atomic vibrational modes of the fluid.

The Configuration 1 embodiment is shown in Figure 1, where the first dielectric and/or polaritonic structure 5 is in contact with the substrate 6 (that could sustain or not polaritons), a top face of the second dielectric and/or polaritonic material structure 3 being intended to be exposed to the fluid or, alternatively, to an intermediate element (not shown) exposed to the fluid. For this embodiment, the polaritonic launcher 2 acts also as a gate, forming part of the circuitry, for creating a doping inhomogeneity across the electrically active channel defined in the electrically active material structure 4 via electric gating, and for tuning the polaritonic resonances and/or electrically active material's Fermi energy.

For some embodiments, not shown, alternative to that of Figure 1, and alternative to any of the rest of embodiments including structure 5, that structure 5 is not needed and, therefore, is not included, or to be more precise, could form part of the substrate 6 forming a continuous structure, or in other words, the substrate 6 would act as a substrate but also implement the function of that structure 5. That would be the case where structure 5 and substrate 6 were dielectric, in which case only a dielectric substrate 6 would be needed, the electrically active material structure 4 would then be in contact with that substrate 6.

Figure 5 shows a slight variation of the embodiment of Figure 1, for which the second dielectric and/or polaritonic material structure 3 does not fully cover the electrically active material structure 4, but is just placed at the bottom face of the launcher 2. In this case, a top face of the electrically active material structure 4 is intended to be exposed to the fluid or to the intermediate element exposed to the fluid.

The Configuration 2 embodiment is shown in Figure 2, for an implementation where the polaritonic launcher 2 is in contact with the substrate 6 and sized so that the substrate 6 is physically separated from the second dielectric and/or polaritonic material structure 3 through an air gap (a medium other than air or a dielectric material could be used instead of that air gap, or surrounding portions of material structures 3 and/or 4 could also be in contact with the substrate 6) surrounding the polaritonic launcher 2, a top face of the first dielectric and/or polaritonic structure 5 and a bottom face of the second dielectric and/or polaritonic material structure 3 facing the air gap being intended to be exposed to said fluid or to said intermediate element exposed to said fluid. For this embodiment, the polaritonic launcher 2 acts also as a gate, forming part of the circuitry, for creating a doping inhomogeneity in the electrically active material structure channel defined in the electrically active material structure 4 via electric gating.

The polaritonic launcher 2 has been depicted in Figure 2, and in the rest of figures, as an indicative representation, therefore it is not to scale. For some embodiments, polaritonic launcher 2 is large enough so that structure 3 is physically separated from substrate 6 due to this.

Similarly to the slight variation of Figure 5, for a corresponding slight variation (not shown) of the embodiment of Figure 2, the second dielectric and/or polaritonic material structure 3 does not fully cover the bottom face of the electrically active material structure 4, but is just placed at the top face of the launcher 2. In this case, a bottom face of the electrically active material structure 4 facing the air gap is intended to be exposed to said fluid or to said intermediate element exposed to said fluid.

The Configuration 3 embodiment is shown in Figure 3, where the circuitry further comprises a gate 7 for creating a doping inhomogeneity in the electrically active material channel defined in the electrically active material structure 4 via electric gating, and for tuning the polaritonic resonances and/or electrically active material's Fermi energy. The gate 7, in this case a local gate (that local gate can be a split gate or implemented as any of the examples described above), is arranged between the substrate 6 and the first dielectric and/or polaritonic structure 5, a top face of the second dielectric and/or polaritonic material structure being intended to be exposed to the fluid or to the intermediate element exposed to the fluid.

Similarly to the slight variation of Figure 5, for a corresponding slight variation (not shown) of the embodiment of Figure 3, the second dielectric and/or polaritonic material structure 3 does not fully cover the electrically active material structure 4, but is just placed at the bottom face of the launcher 2. In this case, a top face of the electrically active material structure 4 is intended to be exposed to the fluid or to the intermediate element exposed to the fluid.

The Configuration 4 embodiment is shown in Figure 4, where the circuitry further comprises a gate 7 (that can be a transparent gate) for creating a doping inhomogeneity in the electrically active material structure channel defined in the electrically active material structure 4 via electric gating, and for tuning the polaritonic resonances and/or electrically active material's Fermi energy. The gate 7, in this case a local gate, is arranged on top of the first dielectric and/or polaritonic structure 5, the polaritonic launcher 2 is in contact with the substrate 6 and sized so that, for the illustrated embodiment, the substrate 6 is physically separated from the second dielectric and/or polaritonic material structure 3 through an air gap (a medium other than air or a dielectric material could be used instead of that air gap, or surrounding portions of material structures 3 and/or 4 could also be in contact with the substrate 6) surrounding the polaritonic launcher 2, the gate 7 and a bottom face of the second dielectric and/or polaritonic material structure 3 facing the air gap being intended to be exposed to the fluid or to the intermediate element exposed to the fluid.

Similarly to the slight variation of Figure 5, for a corresponding slight variation (not shown) of the embodiment of Figure 4, the second dielectric and/or polaritonic material structure 3 does not fully cover the bottom face of the electrically active material structure 4, but is just placed at the top face of the launcher 2. In this case, a bottom face of the electrically active material structure 4 facing the air gap is intended to be exposed to the fluid or to the intermediate element exposed to the fluid.

The fluid sensing mechanism followed by the optical fluid sensor of the first aspect of the invention is schematically shown in Figures 6A, B and C, for the Configuration 1 embodiment, and briefly described below.

The mechanism starts at Figure 6A, where light produces an electric field at the polaritonic launcher(s) 2 represented by the electric field lines produced in the Figure.

Then, as shown in Figure 6B, polaritons are excited into the optoelectronic active material stack to propagate there across, as shown in the Figure by a representation of the electric field distribution of a polaritonic mode in the polaritonic material(s). The polaritons then interact with the vibrational modes of the fluid 1.

Finally, as shown in Figure 6C, the circuitry in electrical contact with the electrically active material structure 4 transduces the optical interactions into an electrical signal: in this case, the circuitry is formed by two electrodes E, a voltage source V_{GATE} applied to the polaritonic launcher/gate 2, and a Voltage meter V (which could also be a current meter) connected to both electrodes E.

To elaborate, the sensor of the present invention consists on an optical sensor/detector that interacts in the near-field and/or far field range between the polaritons and the molecules of the fluid to be sensed, in the infrared or in any wavelength of interest. These near field and/or far field interactions produce a strong change of spectrum of the polaritons (see Figure 44a-b) that is collected by measuring the photoresponse (photovoltage or photocurrent) of the graphene or electrically active material structure (made of one or more layers). The combination of the low dimensional polaritons with a graphene or electrically active layer in a single device provides a highly compact and efficient sensing platform, without the requirement of an external photodetector. Moreover, the polaritonic platform can be electrically or geometrically tuned to target different wavelengths [23, 24] (see Figure 44b). This allows for a single device or pixel to target multiple wavelengths.

Figure 43 describes a typical setup used for the electro-polaritonic detection, for an embodiment. Here, an incoming light source (ultraviolet-visible to millimetre wave) incident through an optical window of a chamber that contains the device and electrical connections. The gases are introduced through an inlet to control the gas flux. In this particular geometry, consists of a polaritonic launcher that can be placed on the bottom or on top of the opto-electronical active materials, which can also act as a local gate (or split gate for instance). The photovoltage or photocurrent produced is measured at the metal electrodes connected to the graphene layer. It has to be remarked that this setup is for aiming control measurements of gas concentrations. However, the sensor is aimed to be operate in ambient conditions and not necessarily inside a chamber.

Following the previous geometrical design described above of the electro-polaritonic sensor, in Figure 44a the absorption cross section spectrum is shown. Several peaks highlighted with black arrows corresponding to several polaritonic modes corresponding to ones spectrally located in the upper (see Figures 44c-d) and lower (Figure 44f) Reststrahlen bands wavelength range of the hexagonal boron nitride (hBN) are noticed. An additional mode is shown in Figure 44e that corresponds to the phonon polariton of the substrate that is silicon oxide, however its absorption cross section is lower compared to the other polaritons. Figure 44b shows the geometrically tunability of the device spectral response by changing the gap size of the split gate.

Figure 38 shows the absorption percentage spectra as a function of the graphene Fermi energy tunability (Figure 38a, for the single unit cell in the inset of the figure) and the geometrical variations (Figure 38b-c) of another device with a different launcher (that of Figure 37), which consists of an array of metal gratings below a low dimensional stack of a bottom and top hBN embedding a graphene layer. We observe the absorption percentage evolution as a function of the Fermi level of graphene above the metal grating, where some peaks appear when increasing the Fermi level, in particular outside the Reststrahlen band (≈6-7 µm) that correspond to graphene plasmons as shown in Fig. 38a. In Fig. 38b, shows how the absorption spectra change when varying the hBN thicknesses for a fixed graphene Fermi level (0.38 eV). A tunable thickness of the polaritonic materials allows to change the polaritonic mode spectral position/frequency/wavelength of the optical fluid sensor of the first aspect of the present invention. Then, the filling factor (width over period ratio of the metal gratings) of the metal grating is tuned by changing the width of the metal (from 55 to 75 nm) with respect to a fixed period (95 nm), where it can be observed the change of the spectral position of the polaritonic nanoresonators peaks, as shown in Fig. 38c. The polaritonic launcher geometry can also be tuned to launch different polaritonic modes by changing parameters such as the width, diameter, period, gap between them, etc. The gas sensing performance of a similar device as shown in Fig. 39 is measured.

The photodetection mechanism of the optical fluid sensor of the present invention is not limited to a specific mechanism, since many of them such as photoconductivity, photovoltaic, bolometer, photothermoelectric (PTE) effect, plasma wave rectification, photo-thermionic effect [30] and any photomechanism are sensitive to the change of absorption due to the interaction between gas or fluid molecules with the polaritons is embraced by the present invention. As an example, a major contribution of the case of the PTE effect is the temperature gradient across the graphene channel produced by the photoexcited carriers [22]. This temperature rise is given by the electrically active material (such as graphene) absorption that produces these photoexcited carriers. Therefore, the electrically active material absorption and the device photoresponse can be directly related [22]. Also, since the electrically active material structure is sandwiched between two dielectric structures (and/or polaritonic structures), the detection principle is less prone to aging and provides the required stability.

Photocurrent measurements performed in the device described in Figures 25 and 44 prove the detection of a specific volatile organic compound (VOC) gas (acetone, Figures 45a-b) with ~1 ppm sensitivity, with the potential to improve by a factor ten by enhancing the light matter interactions and integrating with lower noise CMOS electronics. Fig. 45a shows that the device responsivity drops significantly at the acetone absorption spectral range when increasing the acetone gas concentration. The limit of detection (LOD) is about 2.8 ppm in this particular device as shown in Figure 45b. It must be pointed out that the optical fluid sensors of the invention were not required necessarily to have their surface be functionalized, thus facilitating the fabrication, scalability, and CMOS compatibility. Another VOC gas that the present inventors have detected in the lab was 2-isopropanol or IPA as shown in Figure 45c.

The present inventors studies another embodiment of the optical fluid sensor of the present invention, in particular a sensor containing different launchers that consist of the gratings split gate as shown in Figure 39a. The normalized photocurrent (photocurrent normalized to the one taken at graphene charge neutrality point) spectra is taken forthis sensor for several gate voltages curve to study the gate tunability photoresponse as shown in Figure 39b. A sharp peak around 1440 cm⁻¹ is noticed that corresponds to a polaritonic mode that appears at higher gate voltages (high Fermi levels). Regarding the gas sensing performance, the differential responsivity (δR = responsivity_without_gas - responsivity_with_gas) increases at a specific wavenumbers as a function of the IPA gas concentration, which correspond to the IPA absorption peaks.

The present inventors also demonstrate the time-resolved measurements for gas detection and demonstrate a fast detection speed of < 1 sec as shown in Figures 46A-D. In this case, what is monitored is the photoresponse signal without having a gas introduced in the chamber, followed by several acetone gas injections at small concentrations (few ppm level, see Figures 46A-C). The drop in the photocurrent value is proportional to the gas concentration as shown in Figures 46A-C. Finally, the gases are evacuated and the photoresponse signal returns to a similar value respect to the gas injections. This feature allows the sensor to be reusable and can support several cycles of gas injection. In Figures 46C-D, the fall time corresponding to the photosignal when introducing a small concentration of acetone gas (3 ppm) is fitted. A fall time of 0.9 second is obtained.

The above described Configurations 1 to 4 embodiments are the basic embodiments of the present invention, but they can be varied in many different manners, such as the ones which will be described below with references to the rest of Figures, where different alternative designs are proposed for the elements forming the sensor.

Some variations are shown for one of those four configurations, but in most cases they could also be applied to the rest of configurations.

Different variations for the substrate 6 of the sensor are envisaged for the present invention, some of which are shown in Figures 7A, B and C, such as:
- a dielectric substrate,
- a Si back gate 7 with thin insulator on top, as shown in Figure 7A,
- a waveguide W buried in the substrate 6, as shown in Figure 7B,
- a metal back mirror Bm and insulator on top, as shown in Figure 7C, where s refers to the spacing of the backmirror Bm respect to the device/sensor,
- a metal back mirror Bm acting as gate and insulator on top, also as shown in Figure 7C.

Different variations for the polaritonic launcher 2 of the sensor are envisaged for the present invention, some of which are shown in Figures 8A, B and C, such as:
- metallic gratings, nano cubes, or nano disks, as shown in Figure 8A,
- split gate or antenna split gate 2, optionally + back gate 7, as shown in Figure 8B,
- cavities/nanoholes, as shown in Figure 8C,
- single gate 2 + back gate 7, as shown in Figure 8D.

Further variations for the polaritonic launcher 2 are shown in Figure 9, particularly:
a) gratings/nano rods,
b) nano cubes,
c) nano disks,
d) split gate, antenna split gate,
e) cavities/nanoholes,
f) split gate or antenna split gate with cavities/nanoholes.Most of the launchers 2 can act as gates.
The material thereof, besides a metal, can be graphite, for instance.

Different variations for gates with polaritonic launchers 2 of the sensor are shown in Figures 10A, B and C: Split gate 7 (Figure 10A), single gate 7 (Figure 10B), local gate 7a and backgate 7b (Figure 10C). These gates can be made of metal (non-optically transparent) and by a optically transparent material in the infrared, THz, such as graphene or few layer graphene. We show these variations for configuration 3 as an illustration, but can applied to the other configurations mentioned above.

Three different geometries for the electrically active material structure 4 of the sensor are shown in views a), b) and c) of Figure 11, for conforming single channels, and in Figure 12, for forming a channel array. The source-drain electrodes E length and the width of channels can have a variable value. The invention is not limited to these configurations; other possible alternative configurations are described in the present section, such as the out-of-plane carrier extraction configuration, etc. Also, more than two electrodes can be included, such as in a Hall bar configuration.

Different variations for the arrangement of the electrodes E (source and drain electrodes) are shown in Figure 13, particularly:
a) asymmetric contacts, with two different metal electrode sets E1 and E2,
b), c) 1-dimensional contacts,
d) top contacts,
e) bottom contacts,

The electrode materials can be metals such as Au, Cr, Ti, Pd, Al, TiN, also graphite or doped graphene.

Some examples of combinations of the elements' variations of the mentioned configurations of the optical fluid sensor of the present invention are described below.

A variation of the Configuration 2 embodiment is shown in Figures 14A, B, wherein bottom launchers 2 act as gates, in this case two gates 2, each formed by a plurality of nanorods or strips. For an alternative embodiment (not shown), the strips run perpendicularly to the ones shown in those Figures 14A, B.

Similarly, a variation of the Configuration 1 embodiment is shown in Figures 15A, B, wherein top launchers 2 act as gates, in this case also two gates 2, each formed by a plurality of nanorods or strips. For an alternative embodiment (not shown), the strips run perpendicularly to the ones shown in those Figures 15A, B.

Figures 16A, B schematically show the optical fluid sensor of the first aspect of the present invention, for another variation of the Configuration 1 embodiment, in this case with nanocubes 2 on top of a doping inhomogeneity with backgate 7b and one local gate 7a. In addition to the nanocubes 2 arrangement shown in those figures, there can be different other arrangements for those nanocubes 2, or nanodisks, either in matrix or randomly oriented arrangement.

Figures 17A, B schematically show the optical fluid sensor of the first aspect of the present invention, for another variation of the Configuration 3 embodiment, in this case with resonant split gates 7 with nanocubes launchers 2. α is the flare angle that determines the shape of the antenna to go from dipole to bow tie and other shapes.

Figures 17C, D schematically show the optical fluid sensor of the first aspect of the present invention, for another variation of the Configuration 3 embodiment, in this case with resonant or non-resonant split gates, which depends on the length and width of the gates 7, with nanorods launchers 2.

In Figures 18A, B, embodiments with asymmetric contacts (E1 and E2), with top nanocubes, gratings, nanorods or nanoholes launchers 2 with/without back gate 7b or/and back mirror Bm are shown, for variations of the configuration 3 embodiment. Specifically, for the illustrated embodiment, the polaritonic launchers 2 are formed by a plurality of nanorods or strips. For an alternative embodiment (not shown), the strips run perpendicularly to the ones shown in those Figures 18A, B.Figures 19A, B schematically show the optical fluid sensor of the first aspect of the present invention, for another variation of the Configuration 1 or 3 embodiments, with top split gates non-resonant and resonant with nanoholes (cavities) launchers 2 with or without backmirror Bm or and backgate 7b, and source Es and drain Ed electrodes. Gate total length determines if it is in the resonant or non-resonant condition. α is the flare angle that determines the shape of the antenna to go from dipole to bow tie and other shapes. The advantage of this embodiment is that it will enhance the mode volumes and confinement of the polaritons in hBN and other polaritonic materials.

Similarly to Figures 19A, B, Figures 19C, D schematically show the optical fluid sensor of the first aspect of the present invention, for another variation of the Configuration 2 embodiment, with top split gates non-resonant and resonant with nanoholes (cavities) launchers 2 with or without backmirror Bm or and backgate 7b, and source Es and drain Ed electrodes. Gate total length determines if it is in the resonant or non-resonant condition. α is the flare angle that determines the shape of the antenna to go from dipole to bow tie and other shapes. The advantage of this embodiment is that it will enhance the mode volumes and confinement of the polaritons in hBN and other polaritonic materials.

Another variation of the Configuration 3 embodiment is shown in Figures 20A, B, with a local gate 7 at specific location and top gratings, nanorods, cubes or nanoholes launchers 2. This configuration also includes at a top place the gratings 2 and the gate 7 on the right side or slightly shifted respect to the mentioned positions. Specifically, for the illustrated embodiment, the polaritonic launchers 2 are formed by a plurality of nanorods or strips. For an alternative embodiment (not shown), the strips run perpendicularly to the ones shown in those Figures 20A, B.

Figures 21A, B schematically show the optical fluid sensor of the first aspect of the present invention, for another variation of the Configuration 4 embodiment, wherein a waveguide W is integrated in the substrate 6 with a top face facing bottom launchers 2.

The advantage of this configuration is that the light is well confined in the waveguide W and guided to the detector/sensor. This waveguide W allows highly compact platforms like on on-chip sensors with the integrated source in the chip, as well as integrated interferometers for infrared range such as MEMS.

In the following figures, the above variations and/or further variations of the optical fluid sensor of the present invention are implemented, and simulation and/or experimental data is obtained for those implementations.

Particularly, Figure 22A shows a prototype of the optical fluid sensor of the first aspect of the present invention, built according to the Configuration 1 embodiment but modified as shown in Figure 7C, i.e. with a backmirror Bm arranged under the substrate 6.

By having a backmirror Bm in the device basically this enhances the absorption in the electrically active material structure 4, therefore boosting the responsivity and the sensor limit of detection. Additionally, the backmirror (made of metal or silicon for instance) can work as a back gate to tune the Fermi energy/doping of the electrically active material structure 4.

The spacing layer (s) thickness is adjusted depending on the target wavelength/frequency of operation.

Figure 22B is a plot showing experimental results (photovoltage vs. frequency) obtained with the prototype of Figure 22A, for a parallel polarization, and for a variation of that prototype without the backmirror, for parallel and perpendicular polarizations.

In the presented experimentally data we can observe the following:
A factor 50 of increase when having incident polarization parallel to the antenna man axis (indicated in Figure 22A) compared to the case of perpendicular polarization.

A factor 5 of increase when using a backmirror with the polarization parallel to the antenna (in total x250 in comparison to the perpendicular polarization case).

For figures 24 to 39, embodiments with different variation for the polaritonic launcher(s) are disclosed.

Figure 24 shows the responsivity spectrum in the THz range for different incident polarizations of the THz light. We show a higher photoresponse when the incident polarization is parallel to the antenna main axis, when comparing to the case of the incident polarization being perpendicular.

The antenna length (L) determines its spectral resonance that can be tailored to be resonant from visible to sub-THz range. This field enhancement is converted into hot electrons that will increase the responsivity of the detector/sensor (see ref. Castilla, S., et al. Nat Commun. 11, 4872, 2020). Therefore, this will increase the LOD (Limit Of Detection) of the sensor.

In Figures 25, 26 and 27 a further embodiment is shown. Particularly, Figure 25 shows: a) a top view of the optical fluid sensor, for the embodiment of Figure 8B, where the launcher elements are made of gold, the optoelectronic active material stack of graphene sandwiched between top and bottom hBN structures, the substrate of SiO₂, and the backgate of silicon; b) an optical image of a prototype built according to that embodiment.

Here the polaritonic launcher 2 is a split gate that does not resonate in the particular incident wavelength range (i.e. mid-infrared). However, it acts as a launcher to excite the polaritonic modes of the polaritonic material (3 and 5) as shown in the absorption spectrum (Figure 26) and electric field intensity (Figure 27) plots corresponding to each peak, which enhances the absorption in graphene and consequently increasing the responsivity/sensitivity of the sensor respectively. The advantage of this configuration is the simplicity of the split gate that can have any length or shape for the launcher 2, since what is playing a major role is the central gap. It has to be pointed out that the field enhancement is significant smaller compared to a resonant antenna split gate, as shown previously.

The plots of Figures 28, 29 and 30, also obtained for the sensor of Figure 25, show that the polaritons can be tuned by doping the electrically active material (such as graphene), as clearly shown in Figure 28, where the polaritonic spectral resonance position shifts.

Also for the sensor of Figure 25, plots represented in Figures 31, 32 and 33 show how the polaritonic resonances can be tuned by changing the geometrical parameters of the sensor, such as the gap of the split gate, as shown in Figure 31, where the polaritonic spectral resonance position shifts.

For the same sensor of Figure 25, view b), experimental results are shown in Figure 34. In the experimental data it can be observed that the responsivity is enhanced at the specific peaks observed in the simulations of Figure 26. It can be observed how the responsivity spectrum drops when increasing the concentration of acetone gas.

Also for the sensor of Figure 25, further experimental and simulation results are shown in Figure 35. In the plot of that figure, the normalized photoresponse spectra with and without acetone gas divided by the spectra without acetone gas obtained experimentally is shown. They were compared to analogous simulated absorption with the same normalization described previously (not shown). A very good agreement between experiment and theory was observed. In the case of experimental data, the ranges of gas concentration is from 4 to 40 ppm. The simulations consisted on adding a thin layer of acetone that increases the thickness with the increase of gas concentration.

Figure 37 schematically show the optical fluid sensor of the first aspect of the present invention, for an embodiment similar to that of Figure 14B with a SiO₂/Silicon substrate, wherein the launcher elements are metallic gratings/nanocubes.

Plots showing simulation results, obtained with the sensor of Figure 37, are depicted in Figure 38.

From those plots, it can be observed that in the case of using metal gratings/nanorods or cubes, besides launching polaritons in hBN or polaritonic active material, it is possible to launch also graphene plasmons in the electrically active channel 4 of the sensor since these metal nanostructures match the in-plane momentum (plasmon wavelength) of the graphene plasmons (or of any other electrically active material used instead of graphene). Another advantage of this embodiment is that it compresses the incoming light extremely in these nanoresonators/cavities into small mode volumes to enhance light-matter interactions.

Figure 39 shows: a) the optical fluid sensor of the first aspect of the present invention, for an embodiment similar to that of Figure 37 with a CaF₂ substrate; b) and c) plots showing experimental results obtained with a prototype built according to view a), particularly: b) photocurrent spectra for several gate voltages; c) normalized photoresponse for several 2-isopropanol (IPA) gas concentrations sensed by the sensor at the mid-infrared range, showing the development of peaks at the vibrational modes of IPA.

Figure 40 shows electrical spectroscopy measurements, specifically the normalized photocurrent spectrum of the optical fluid sensor with the same cross section as the one shown in Figures 14A-B and 39 at two Fermi energies. The photocurrent spectra are normalized to the spectrum at graphene's charge neutrality point (CNP). The polaritonic peaks are labelled by the arrows. The highlighted spectral regions in gray correspond to the upper and lower Reststrahlen bands (RBs) of hBN and in light gray to the SiO₂ RB. The curves are offset for clarity.

Regarding variations of the electrodes of the sensor, Figure 41A shows an optical image of a prototype built according to a configuration like that of Figure 18B, embodiments with asymmetric contacts E1, E2, but with only one of the launcher elements there shown.

In that prototype, there is a graphene channel doping inhomogeneity. In this case, the signal comes from the graphene-contact interface (black spot indicated in the optical image of Figure 41A and photocurrent map of Figure 41B). This can be achieve by having different metal materials with different workfunctions for instance. The graphene doping inhomogeneity in the channel produces a net photoresponse.

It has to be noticed that at this interface, the spectral response driven by the polaritons can be tuned with the silicon back gate by shifting the polaritonic resonance's spectral position (Figure 41C). Moreover, the responsivity spectrum is affected by the acetone gas concentration (Figure 41D), hence being able to operate as a gas sensing platform.

The advantage of this configuration is the simplicity of the design, which does not require a split gate to sense gases/fluid.

Regarding the sensor arrangement of the second aspect of the invention, an embodiment is shown in Figure 42, where the arrangement particularly comprising an array of optical fluid sensors, for multispectral applications. The figure above shows a quite simplistic case of having an array of sensors, in this case only showing the launcher element on top consisting of bow tie antennas with different lengths. By following this approach, when having different sizes of launchers or resonators, several wavelengths or spectral ranges can be targeted, for applications of multiple gases detection, for instance.

Another possibility is to tune the launchers to the same or similar size to maximize the measured signal for a specific wavelength or specific wavelength range.

Further embodiments, configurations, and variants of the optical fluid sensor of the first aspect of the present invention are shown in Figures 47 to 51 and described below.

Specifically, Figures 47, 48 and 49 refer to out-of-plane carrier extraction configurations, which can be based on a photovoltaic or any other mechanism listed before.

The materials of structures 4 and 5 are mutually different and can be two different semiconductors, for example with n and p-type for instance.

Both structures 4, 5 are made of an electrically active material, and at least one of them is made of a polaritonic material.

Therefore, the polaritonic modes can be activated by placing a polaritonic launcher(s) 2 in the vicinity of the polaritonic material, as shown in Figure 47A. The top and bottom electrodes E collect the charge carriers generated at the vertically stacked materials.

The materials of the electrodes E can be also made of transparent materials at the investigated spectral range.

In Figures 47B and C, only the material of one of structures 4 and 5 is polaritonic, so an additional polaritonic material structure 3 is added between structure 4 and polaritonic launcher(s) 2.

In Figures 47D and E, both structures 4 and 5 are made of polaritonic materials and the top electrodes E also are polaritonic launchers 2, being constituted for instance by an array of metal gratings/fingers as shown in Figure 47E. Thus, the same elements work simultaneously as a top electrode and polaritonic launcher.

Similarly, in Figure 48A the same elements act as both bottom electrodes E and polaritonic launchers 2. The top electrode E is a transparent material in the investigated spectral range.

In Figure 48B, the polaritonic launchers 2 and grating electrodes E are placed on both the top and bottom region of the device, and the same elements act as both electrodes E and polaritonic launchers 2.

In Figure 48C, there is an additional polaritonic material structure 3 placed under the elements acting as top electrodes E and polaritonic launchers 2, while in Figure 48D the additional polaritonic material structure 3 is placed over the elements acting as bottom electrodes E and polaritonic launchers 2, and in Figure 48E there are top and bottom material structures acting as electrodes E and polaritonic launchers 2 and top and bottom additional polaritonic material structures 3.

In Figure 49A, there is a patterned polaritonic material 3 which acts as a polaritonic launcher 2 for the structures 4, 5 below, while in Figure 49B the patterned polaritonic material 3 is placed on the side next to the bottom electrode E and acts as a polaritonic launcher for the structures 4, 5 above.

Figure 50 schematically shows different variants of an embodiment of the optical fluid sensor of the first aspect of the present invention, including different types of lateral junctions.

Specifically, Figure 50A includes two local gates 7 for creating a homojunction, for example a pn-junction, in a channel defined by the same material, to produce carrier extraction laterally in the same material that can have an electrically active tuneable doping level, in this case in the electrically active material of structure 4. Structure 3 is made of an insulator and polaritonic material and structure 5 is made of an insulator and/or polaritonic material. A backmirror Bm is placed under the substrate 6.

Figure 50B, structures 4a and 4b are made of two electrically active materials with different doping (e.g. two semiconductors being one n-type and the other p-type doping or two different materials) to create a heterojunction in a channel defined by those two electrically active materials. A backmirror Bm and backgate 7b are placed under the substrate 6.

Figures 50C and D differ from Figure 50B in that local gates 7 (Figure 50C) or a backgate 7b (Figure 50D) are included for actively controlling a tuneable doping level on the two electrically active materials (semiconductors, semimetals, etc.). A backmirror Bm is placed under the substrate 6 for the configuration of Figure 50C.

Figure 51 schematically shows different variants of an embodiment of the optical fluid sensor of the first aspect of the present invention, including a structure 3 made of a patterned polaritonic material acting as polaritonic launchers 2.

In Figure 51A, the patterned polaritonic material 3 is also an insulator and is placed on top of the electrically active material structure 4. Structure 5 is made of an insulator and/or polaritonic material and two local gates 7 are placed between structure 5 and substrate 6. A backmirror Bm is placed under the substrate 6.

In Figure 51B, the patterned polaritonic material 3 is also an insulator and is placed on the substrate 6, under structure 3, and two transparent local gates 7t are placed on top of structure 5. Structure 5 is made of an insulator and/or polaritonic material. A backmirror Bm is placed under the substrate 6.

In Figure 51C, the patterned polaritonic material 3 is a semimetal or semiconductor and is placed on a further dielectric and/or polaritonic material structure 8 placed on the electrically active material structure 4. A backmirror Bm is placed under the substrate 6.

The configuration shown in Figure 51D differs from that of Figure 51C in that a further insulator structure 9 and top transparent gate 7t is placed on the patterned polaritonic material 3.

A person skilled in the art could introduce changes and modifications in the embodiments described without departing from the scope of the invention as it is defined in the attached claims.

### References:

[1] Hu, H., Yang, X., Zhai, F. et al. Far-field nanoscale infrared spectroscopy of vibrational fingerprints of molecules with graphene plasmons. Nat Commun. 7, 12334 (2016). https://doi.org/10.1038/ncomms12334
[2] Daniel Rodrigo et al., Mid-infrared plasmonic biosensing with graphene. Science 349, 165-168 (2015). DOI:10.1126/science.aab2051
[3] Hu, H., Yang, X., Guo, X. et al. Gas identification with graphene plasmons. Nat Commun. 10, 1131 (2019). https://doi.org/10.1038/s41467-019-09008-0
[4] Bareza, Nestor Jr., Wajs, Ewelina, et al. Quantitative Mid-Infrared Plasmonic Biosensing on Scalable Graphene Nanostructures. Adv. Mater. Interfaces 2201699 (2022).
[5] Bareza, Nestor Jr, Kavitha K. Gopalan, Rose Alani, Bruno Paulillo, and Valerio Pruneri. Mid-infrared gas sensing using graphene plasmons tuned by reversible chemical doping. ACS Photonics 7, no. 4 (2020).
[6] Debashis Chanda, Alireza Safaei, Michael LEUENBERGER. Optical detector device with patterned graphene layer and related methods. US Patent US 10784387 B2.
[7] Alireza Safaei, Sayan Chandra, Michael N. Leuenberger, Debashis Chanda. Wide Angle Dynamically Tunable Enhanced Infrared Absorption on Large Area Nanopatterned Graphene. ACS Nano 22;13(1):421-428 (2018).
[8] Nestor Jr. Bareza, Bruno Paulillo, Tetiana M. Slipchenko et al. Phonon-Enhanced Mid-Infrared CO2 Gas Sensing Using Boron Nitride Nanoresonators. ACS Photonics 9 (1), 34-42 (2022).
[9] M. Autore, et al. Boron nitride nanoresonators for phonon-enhanced molecular vibrational spectroscopy at the strong coupling limit. Light: Science and Applications 7, 17172-17178 (2018).
[10] In-Ho Lee, Daehan Yoo, Phaedon Avouris, Tony Low & Sang-Hyun Oh. Graphene acoustic plasmon resonator for ultrasensitive infrared spectroscopy. Nature Nanotechnology 14, 313-319 (2019).
[11] David Alcaraz Iranzo et al. Probing the ultimate plasmon confinement limits with a van der Waals heterostructure. Science 360,291-295(2018).
[12] SH Oh, IH Lee, T Low. Graphene Plasmon Resonators. US Patent App. 16/894,314.
[13] Lee, IH., He, M., Zhang, X. et al. Image polaritons in boron nitride for extreme polariton confinement with low losses. NatCommun. 11, 3649 (2020). https://doi.org/10.1038/s41467-020-17424-w
[14] I. Epstein, et al. Far-field excitation of single graphene plasmon cavities with ultracompressed mode volumes. Science 368 (6496), 1219-1223 (2020).
[15] Isaac. J. Luxmoore, Peter Q. Liu et al. Graphene-Metamaterial Photodetectors for Integrated Infrared Sensing. ACS Photonics 2016, 3, 936-941.
[16] Freitag, M., Low, T., Zhu, W. et al. Photocurrent in graphene harnessed by tunable intrinsic plasmons. Nat. Commun. 4, 1951 (2013). https://doi.org/10.1038/ncomms2951
[17] Q. Guo, R. Yu, C. Li, S. Yuan, B. Deng, F. J. Garcia de Abajo, F. Xia, Nat. Mater. 2018, 17, 986.
[18] Safaei, A., Chandra, S., Shabbir, M.W. et al. Dirac plasmon-assisted asymmetric hot carrier generation for room-temperature infrared detection. Nat. Commun. 10, 3498 (2019).
[19] D Chanda, M Leuenberger, A Safaei, S Chandra. Plasmon-assisted photothermoelectric effect based detection of infrared radiation on asymmetrically patterned graphene. US Patent 11,217,738.
[20] Bandurin, D.A., Svintsov, D., Gayduchenko, I. et al. Resonant terahertz detection using graphene plasmons. Nat Commun 9, 5392 (2018). https://doi.org/10.1038/s41467-018-07848-w
[21] Xie, J., Ren, Z., Wei, J., Liu, W., Zhou, J., Lee, C., Zero-Bias Long-Wave Infrared Nanoantenna-Mediated Graphene Photodetector for Polarimetric and Spectroscopic Sensing. Adv. Optical Mater. 2023, 11, 2202867. https://doi.org/10.1002/adom.202202867
[22] S. Castilla, I. Vangelidis, VV. Pusapati, et al. Plasmonic antenna coupling to hyperbolic phonon polaritons for sensitive and fast mid-infrared photodetection with graphene. Nature Communications, 11, 4872 (2020).
[23] Wu, C. et al. Ultrasensitive Mid-Infrared Biosensing in Aqueous Solutions with Graphene Plasmons. Adv. Mater. 34, 2110525 (2022).
[24] Xiaochao Tan, Heng Zhang, Junyu Li, et al. Non-dispersive infrared multi-gas sensing via nanoantenna integrated narrowband detectors. Nature Communications 11, 5245 (2020).
[25] Woessner, A. et al. Highly confined low-loss plasmons in graphene-boron nitride heterostructures. Nature Mater. 14, 421-425 (2015).
[26] Lundeberg, M. B. et al. Tuning quantum nonlocal effects in graphene plasmonics. Science 357, 187-191 (2017).
[27] Dai, S. et al. Subdiffractional focusing and guiding of polaritonic rays in a natural hyperbolic material. Nature Communications 6, 1-7 (2015).
[28] Bylinkin, A. et al. Real-space observation of vibrational strong coupling between propagating phonon polaritons and organic molecules. Nature Photonics 15, 197-202 (2021).
[29] Cai, X. et al. Sensitive room-temperature terahertz detection via the photothermoelectric effect in graphene. Nature Nanotechnology 2014, 9, 814-819.
[30] Massicotte, et al. Photo-thermionic effect in vertical graphene heterostructures. Nat Commun 7, 12174 (2016).
[31] Caridad. José M. et al. Room-Temperature Plasmon-Assisted Resonant THz Detection in Single-Layer Graphene Transistors. Nano Lett. 2024, 24, 3, 935-942.

## Claims

1. An optical fluid sensor, comprising, integrated into a common chip:
- a substrate (6);
- an optoelectronic active material stack arranged over said substrate (6), intended to be exposed to a fluid or to an intermediate element exposed to said fluid, and comprising:
- at least one dielectric and/or polaritonic material structure (3, 5); and
- an electrically active material structure (4) arranged over or under said at least one dielectric and/or polaritonic structure (3, 5);
wherein at least one of said structures (3, 4, 5) is made of a polaritonic material,
- circuitry in electrical contact with said electrically active material structure (4); and
- a polaritonic launcher (2) configured and arranged to, upon illumination, launch polaritons into said optoelectronic active material stack to propagate there across;
wherein said optoelectronic active material stack is configured and arranged so that, when exposed to said fluid or to said intermediate element exposed to said fluid, said polaritons carry out far-field and/or near-field optical interactions with one or more molecular and/or atomic vibrational modes of the fluid; and wherein said circuitry together with said electrically active material structure (4) are configured and arranged to sense the fluid by transducing said optical interactions into an electrical signal representing a change in a property of the polaritons.

2. The optical fluid sensor of claim 1, wherein said at least one dielectric and/or polaritonic material structure comprises:
- a first dielectric and/or polaritonic material structure (5) arranged over or under said electrically active material structure (4); and
- a second dielectric and/or polaritonic material structure (3) arranged under or over said electrically active material structure (4).

3. The optical fluid sensor of claim 2, wherein:
- said first dielectric and/or polaritonic structure (5) is in contact with said substrate (6), a top face of said second dielectric and/or polaritonic material structure (3) and/or a top face of said electrically active material structure (4) being intended to be exposed to said fluid or to said intermediate element exposed to said fluid; or
- said circuitry further comprises a gate (7) at least for creating, via electric gating, a doping inhomogeneity across an electrically active material channel defined in the electrically active material structure (4), wherein said gate (7) is arranged between said substrate (6) and the first dielectric and/or polaritonic structure (5), a top face of said second dielectric and/or polaritonic material structure (3) and/or a top face of said electrically active material structure (4) being intended to be exposed to said fluid or to said intermediate element exposed to said fluid.

4. The optical fluid sensor of claim 2, wherein:
- said polaritonic launcher (2) is in contact with said substrate (6), at least a top face of said first dielectric and/or polaritonic structure (5) being intended to be exposed to said fluid or to said intermediate element exposed to said fluid; or
- said circuitry further comprises a gate (7) at least for creating, via electric gating, a doping inhomogeneity across an electrically active material channel defined in the electrically active material structure (4), wherein said gate (7) is arranged on top of the first dielectric and/or polaritonic structure (5), wherein said polaritonic launcher (2) is in contact with said substrate (6), at least said gate (7) being intended to be exposed to said fluid or to said intermediate element exposed to said fluid.

5. The optical fluid sensor of claim 3 or 4, wherein at least for those alternatives when said circuitry does not further comprises said gate (7), said polaritonic launcher (2) acts also as a gate, forming part of said circuitry, at least for creating, via electric gating, a doping inhomogeneity across an electrically active material channel defined in the electrically active material structure (4).

6. The optical fluid sensor of any of the previous claims, wherein said polaritonic launcher (2) and said optoelectronic active material stack are configured and arranged so that the polaritons are phonon polaritons and/or hyperbolic phonon polaritons and/or plasmon polaritons and/or exciton polaritons.

7. The optical fluid sensor of any of the previous claims, wherein said optoelectronic active material stack is a low dimensional stack, so that the polaritons are low dimensional polaritons.

8. The optical fluid sensor of any of the previous claims, wherein said electrically active material structure (4) is made of at least one of the following materials: graphene, few layer graphene, black phosphorous, twisted graphene and related, graphdiyne, graphXenes, or a similar low dimensional material, or a combination thereof.

9. The optical fluid sensor of any of the previous claims, wherein said optoelectronic active material stack and at least one of said polaritonic launcher (2) and said circuitry are configured and arranged to excite polaritons according to multiple polaritonic modes to sense different fluids and/or different molecular components of the composition of the fluid.

10. The optical fluid sensor of claim 9, wherein:
- the optoelectronic active material stack and/or the polaritonic launcher (2) are geometrically tuned to cause said excitation of polaritons according to multiple polaritonic modes, to target multiple wavelengths; and/or
- the circuitry is configured and arranged to electrically tune the spectral resonances of the polaritonic modes of the optoelectronic active material stack to cause said excitation of polaritons according to multiple polaritonic modes, to target multiple wavelengths.

11. The optical fluid sensor of any of the previous claims, wherein said circuitry comprises at least two electrodes (E) contacting two opposite ends of said electrically active material structure (4) for measuring a photo-induced electrical signal circulating or present there across.

12. The optical fluid sensor of any of the previous claims, wherein said polaritonic launcher (2) comprises at least one launcher element made of metal, graphite, polaritonic material, or dielectric resonators

13. The optical fluid sensor of any of the previous claims, wherein said polaritonic launcher (2) is or comprises at least one of the following launcher elements: a grating, nano rods, nano cubes, nano disks, a split gate, an antenna split gate, cavities/nanoholes, a single gate plus a back gate, electrodes, or a combination thereof.

14. The optical fluid sensor of any of the previous claims, further comprising an optical waveguide (W) integrated into the substrate (6), wherein said optical waveguide (W) is configured and arranged to at least provide said illumination to the polaritonic launcher (2).

15. An optical fluid sensor arrangement, comprising at least two optical fluid sensors defined as the optical fluid sensor of any of the previous claims, integrated into a single chip integrating the common chips of each of said optical fluid sensors.
